# EUROPÄISCHE PATENTANMELDUNG

(11) **EP 4 813 563 A1**
(43) Veröffentlichungstag der Anmeldung: **30.09.2026**
(21) Anmeldenummer: 26166912.1
(22) Anmeldetag: 23.03.2026
(51) Int. Cl.: B23Q 1/01, B23Q 1/58, B23Q 3/155, B23Q 17/00

(54) **WERKSTÜCKBEARBEITUNGSANLAGE UND VERFAHREN ZUR PROZESSIERUNG VON WERKSTÜCKEN MIT VERFAHRBAREM LAGERUNGSSYSTEM FÜR WERKZEUGAGGREGATE**

(30) Priorität: 25.03.2025 DE 102025111567
(71) Anmelder: Weinmann Holzbausystemtechnik GmbH, 72813 St. Johann (DE)
(72) Erfinder: Wagner, Mathias, 71254 Ditzingen (DE); van Aken, Benjamin, 72770 Reutlingen (DE)
(74) Vertreter: Dürr - Corporate IP

(57) **Zusammenfassung**

Die Erfindung betrifft eine Werkstückbearbeitungsanlage 10 zum Prozessieren eines Werkstücks 110, wobei die Werkstückbearbeitungsanlage 10 eine Bewegungseinheit 40 aufweist, die entlang einer Längsrichtung 210 der Werkstückbearbeitungsanlage 10 bewegbar ist und an der eine Aufnahmeeinheit 70 für ein Werkzeugaggregat 60 zum Prozessieren des Werkstücks 110 angeordnet ist, und wobei die Werkstückbearbeitungsanlage 10 ein Lagerungssystem 20' mit wenigstens einem Lagerplatz 25, 25', 25" für das Werkzeugaggregat 60 aufweist. Das Lagerungssystem 20 ist eingerichtet, sich unabhängig von der Bewegungseinheit (40) insbesondere zum jeweiligen Aufenthaltsort der Bewegungseinheit (40) insbesondere in einer horizontalen Ebene zu bewegen. Die Erfindung betrifft ferner ein Verfahren zum Prozessieren eines Werkstücks 110, wobei das Verfahren die folgenden Schritte umfasst: Bewegen 300 einer Bewegungseinheit 40, an der eine Aufnahmeeinheit 70 für ein Werkzeugaggregat 60 zum Prozessieren eines Werkstücks 110 angeordnet ist, entlang einer Längsrichtung 210 der Werkstückbearbeitungsanlage 10 und Bewegen 310 eines Lagerungssystem 20, 20' mit wenigstens einem Lagerplatz 25, 25', 25" für das Werkzeugaggregat 60 unabhängig von der Bewegungseinheit 40 insbesondere zum jeweiligen Aufenthaltsort der Bewegungseinheit 40 bevorzugt in einer horizontalen Ebene.

## Beschreibung

Die Erfindung betrifft eine Werkstückbearbeitungsanlage zur Prozessierung eines Werkstücks nach dem Oberbegriff von Anspruch 1. Des Weiteren betrifft die Erfindung ein Verfahren zur Prozessierung eines Werkstücks mit einer Werkstückbearbeitungsanlage nach dem Oberbegriff von Anspruch 22.

Werkstückbearbeitungsanlagen dieser Art werden eingesetzt, um Werkstücke in einer automatisierten oder teilautomatisieren Fertigung zu prozessieren. Eine derartige Fertigung findet sich in unterschiedlichsten Branchen, wie z.B. dem Fertighausbau, der Automobilindustrie oder der Luftfahrtindustrie. Insbesondere in allen Branchen in denen größere Werkstücke prozessiert werden.

Im Fertighausbau werden Werkstücke mit Werkstückbearbeitungsanlagen in einer industriellen Halle vorgefertigt. Im Gegensatz zum Fertighausbau werden im klassischen Hausbau alle Arbeitsschritte auf einer Baustelle durch Bauarbeiter und Zimmermänner durchgeführt. Die Vorfertigung der Werkstücke in einer industriellen Halle ist vorteilhaft, um die Qualität aufgrund halbautomatisierter oder vollautomatisierter Prozesse zu steigern und den zeitlichen Aufwand für die Errichtung eines Hauses auf der Baustelle zu minimieren.

Ein Haus oder eine Wohneinheit besteht aus mehreren Werkstücken. Diese verschiedenen Werkstücke sind derart vorgefertigt, dass diese auf einer Baustelle einfach und schnell zusammenbaubar sind. Insbesondere sind hierfür die Schnittstellen der verschiedenen Werkstücke aufeinander abgestimmt, um ein schnelles und einfaches Aufbauen eines Hauses oder einer Wohneinheit auf der Baustelle zu ermöglichen.

Eine konventionelle Werkstückbearbeitungsanlage umfasst eine mobile bzw. verfahrbare Werkzeugmaschine, an der Werkzeugaggregate zur Prozessierung von Werkstücken angeordnet sind. Die Werkzeugaggregate sind mit Hilfe der mobilen Werkzeugmaschine über ein Werkstück bewegbar, um das Werkstück zu prozessieren. Die Werkzeugaggregate sind jeweils für unterschiedliche Arbeitsschritte am Werkstück vorgesehen. Die einzelnen Werkzeugaggregate müssen bei solchen Werkzeugmaschinen bei Bedarf von Werkern händisch ausgetauscht werden.

An weiterentwickelten Werkstückbearbeitungsanlagen sind die einzelnen Werkzeugaggregate automatisch an einem stationären Magazin austauschbar. Mehrere Werkzeugaggregate zur Prozessierung eines Werkstücks werden in dem stationären Magazin gelagert. Das stationäre Magazin steht dabei fest auf dem Boden der industriellen Halle. Das stationäre Magazin ist derart angeordnet, dass das Magazin von der mobilen Werkzeugmaschine erreichbar ist. An einer Aufnahmeeinheit für Werkzeugaggregate, welche an einer mobilen Werkzeugmaschine angeordnet ist, können Werkzeugaggregate ein- und ausgewechselt werden. Zum Austausch eines Werkzeugaggregats bewegt sich die mobile Werkzeugmaschine mit der Aufnahmeeinheit zum stationären Magazin und tauscht ein Werkzeugaggregat automatisch aus.

In kleinen Betrieben, die in der Branche des Fertighausbaus tätig sind, insbesondere in Zimmereien, werden bevorzugt alle Arbeitsschritte zur Fertigstellung eines vorgefertigten Werkstücks in einer Fertigung mit einer einzelnen Arbeitsstation ausgeführt. In diesem Fall wird an der Arbeitsstation eine mobile Werkzeugmaschine mit einem stationären Magazin für Werkzeugaggregate eingesetzt, um die Bearbeitungsvielfalt der Fertigung zu steigern und verschiedene Arbeitsschritte mit der gleichen Arbeitsstation auszuführen. Wohingegen in größeren Betrieben aus dieser Branche, insbesondere in Fertighausindustrieunternehmen, eine Fertigung mit mehreren Arbeitsstationen eingerichtet ist, um ein vorgefertigtes Werkstück bevorzugt getaktet und besonders schnell fertigzustellen. Hierbei wird pro Arbeitsstation nur ein Arbeitsschritt ausgeführt und das Werkstück wird nach jedem Arbeitsschritt von einer Arbeitsstation zur nächsten Arbeitsstation transportiert. In diesem Fall wird an jeder Arbeitsstation eine mobile Werkzeugmaschine mit einem stationären Magazin für Werkzeugaggregate eingesetzt, um Stillstandzeiten der Fertigung zu minimieren.

Es ist daher Aufgabe der vorliegenden Erfindung, eine Werkstückbearbeitungsanlage zur Prozessierung eines Werkstücks mit verfahrbarem Lagerungssystem für Werkzeugaggregate bereitzustellen, die den Austausch eines Werkzeugaggregats weiter optimiert. Diese Aufgabe wird erfindungsgemäß gelöst durch eine Werkstückbearbeitungsanlage gemäß Anspruch 1 und ein Verfahren gemäß Anspruch 22.

Eine erfindungsgemäße Werkstückbearbeitungsanlage zum Prozessieren eines Werkstücks, weist eine Bewegungseinheit auf, die entlang einer Längsrichtung der Werkstückbearbeitungsanlage bewegbar ist. An der Bewegungseinheit ist eine Aufnahmeeinheit für ein Werkzeugaggregat zum Prozessieren des Werkstücks angeordnet. Die Werkstückbearbeitungsanlage weist ferner ein Lagerungssystem mit wenigstens einem Lagerplatz für das Werkzeugaggregat auf. Erfindungsgemäß ist das Lagerungssystem unabhängig von der Bewegungseinheit bevorzugt in Richtung der Bewegungseinheit bewegbar oder abhängig von der Bewegungseinheit bevorzugt zusammen mit der Bewegungseinheit bewegbar.

Die Werkstückbearbeitungsanlage mit dem unabhängig von der Bewegungseinheit bewegbaren Lagerungssystem ist vorteilhaft, da die Effizienz der Fertigung gesteigert wird. Insbesondere liegt der besondere Vorteil der Erfindung im Gegensatz zum Stand der Technik darin, dass neben der Bewegungseinheit auch das Lagerungssystem bewegbar gestaltet ist, um die Erreichbarkeit des Lagerungssystems durch die Bewegungseinheit zu beschleunigen und folglich die Verfügbarkeit der im Lagerungssystem gelagerten Werkzeugaggregate zu beschleunigen. Das Lagerungssystem ist bevorzugt in Richtung der Bewegungseinheit bewegbar, wobei die Fertigungseffizient der Werkstückbearbeitungsanlage weiter gesteigert wird.

Ferner ist die Werkstückbearbeitungsanlage mit dem abhängig von der Bewegungseinheit bewegbaren Lagerungssystem vorteilhaft, da hierbei ebenfalls die Effizienz der Fertigung gesteigert wird. Zum Beispiel könnte die Bewegungseinheit als Zugmaschine fungieren und das Lagerungssystem entlang der Längsrichtung ziehen oder vor sich herschieben. Insbesondere könnte das Lagerungssystem an der Bewegungseinheit angekoppelt sein, wobei das Lagerungssystem von der Bewegungseinheit verschoben werden kann. Insbesondere könnte das angekoppelte Lagerungssystem ein eigenes nicht angetriebenes Fahrwerk umfassen, mit welchem das Lagerungssystem bewegbar ist. Ebenfalls möglich ist, dass das Lagerungssystem nicht mechanisch mit der Bewegungseinheit verbunden ist, sondern dass das Lagerungssystem nahe an der Bewegungseinheit positioniert ist, um die Anfahrtswege der Bewegungseinheit zu verkürzen. Hierbei stünden der Bewegungseinheit mehrere im Lagerungssystem gelagerte Werkzeugaggragate mit schneller Verfügbarkeit zur Verfügung.

Das Lagerungssystem, welches eingerichtet ist, sich abhängig oder unabhängig von der Bewegungseinheit insbesondere zum jeweiligen Aufenthaltsort der Bewegungseinheit insbesondere in einer horizontalen Ebene zu bewegen bedeutet somit insbesondere, dass die Bewegungseinheit erste Bewegungselemente wie beispielsweise Räder umfasst, um sich entlang der Längsrichtung der Werkstückbearbeitungsanlage zu bewegen, und dass das Lagerungssystem zweite Bewegungselemente wie beispielsweise Räder umfasst, um sich ebenfalls abhängig oder unabhängig von der Bewegungseinheit insbesondere entlang der Längsrichtung der Werkstückbearbeitungsanlage zu bewegen.

Die Längsrichtung der Werkstückbearbeitungsanlage entspricht der jener Richtung der Werkstückbearbeitungsanlage, in der sich bevorzugt die größte Länge der zu bearbeitenden Werkstücke erstreckt. Eine Querrichtung der Werkstückbearbeitungsanlage entspricht einer Richtung senkrecht zur Längsrichtung und parallel zu einer Standfläche bzw. Grundfläche der Werkstückbearbeitungsanlage für die zu bearbeitenden Werkstücke.

Unter dem Werkstück wird insbesondere ein Holzrahmenelement oder ein Massivholzelement verstanden. Hierbei unterscheidet der Fachmann zwischen Wandelementen, Deckenelementen und Dachelementen. Das Werkstück kann im folgenden Abmessungsbereich liegen:

| | |
|---|---|
| Höhe: | 2.200 mm bis 2.500 mm |
| Länge: | 2.000 mm bis 10.000 mm |
| Dicke: | 200 mm bis 600 mm |

Ein solches Holzrahmenelement besteht im Wesentlichen aus einem Riegelwerk, auch Fachwerk genannt, welches aus Bauholz zusammengesetzt ist. Das Riegelwerk besteht im Fall eines aufrecht stehenden Holzrahmenelements im Wesentlichen aus mehreren vertikalen Bauhölzern und zwei horizontalen Bauhölzern, wobei die vertikalen Bauhölzer in der Fachsprache "Stiele" genannt werden und die horizontalen Bauhölzer in der Fachsprache "Gurte" genannt werden.

Das Bauholz ist im Wesentlichen Brettschichtholz oder Konstruktionsvollholz, welches aus Nadelhölzern hergestellt ist. Das Bauholz hat einen Querschnitt von bevorzugt 60 mm x 120 mm oder 38 mm x 89 mm (2 Zoll x 4 Zoll). Das Bauholz des Riegelwerks ist formschlüssig miteinander verbunden. Insbesondere ist das Bauholz des Riegelwerks mit Schrauben, Nägeln und/oder Klammern verbunden.

Die zusammengesetzten Stiele und Gurte bilden einen Holzrahmen. Die Anzahl der Stiele ist variabel und hängt von der Länge des Werkstücks ab. Die Stiele sind in einem Abstand im Bereich von bevorzugt 300 mm bis 900 mm parallel nebeneinander angeordnet. Zwischen den Stielen und Gurten des Riegelwerks ist Dämmmaterial angeordnet. Bevorzugt sind zwischen den Stielen und Gurten des Riegelwerks als Dämmmaterial sogenannte Dämmmatten angeordnet. Ein Holzrahmenelement in diesem Zustand ist beispielsweise ein Werkstück, dass mit der Werkstückbearbeitungsanlage prozessiert werden kann.

Alternativ kann bzw. können auf jenen größten Seitenflächen des Riegelwerks, wo zuvor die Fächer zwischen den Stielen und Gurten sichtbar waren, jeweils eine Platte oder mehrere Platten nebeneinander angebracht sein. Die Platten sind bevorzugt mittels Schrauben, Nägeln und/oder Klammern mit dem Riegelwerk verbunden. Auch ist es möglich, dass die Platten mit den Seitenflächen des Riegelwerks verklebt werden. Die Platten sind im Wesentlichen OSB-Platten, Gipsfaserplatten, Gipskartonplatten, Holzfaserplatten oder zementgebundene Platten. Auch ein Holzrahmenelement in diesem Zustand ist somit ein Werkstück, dass mit der Werkstückbearbeitungsanlage prozessiert werden kann.

Ein von der Werkstückbearbeitungsanlage abgestütztes Werkstück für die folgende Prozessierung hat beispielsweise sechs Flächen, soweit es sich um ein Werkstück in Quaderform handelt. Die Seitenflächen des Werkstücks entsprechen jenen vier Flächen, welche sich in einer Höhenrichtung erstrecken, wobei die Höhenrichtung senkrecht zur Längsrichtung und zur Querrichtung der Werkstückbearbeitungsanlage verläuft. Eine nach oben gerichtete in der Regel freie Fläche des Werkstücks bildet eine Oberseite des Werkstücks. Eine nach unten gerichtete in der Regel verdeckte Fläche des Werkstücks bildet eine Unterseite des Werkstücks.

Zur Prozessierung des Werkstücks wird das Werkstück flach gelagert. Die flache Lagerung des Werkstücks bedeutet z.B., dass eine Hochachse des Holzrahmenelements entlang der Querrichtung der Werkstückbearbeitungsanlage ausgerichtet ist und eine Längsachse des Holzrahmenelements entlang der Längsrichtung der Werkstückbearbeitungsanlage ausgerichtet ist. Durch die flache Lagerung des Werkstücks wird damit eine Seitenfläche des Holzrahmenelements, die durch die Hochachse und die Längsachse gebildet wird, zu einer Oberseite des Werkstücks und die gegenüberliegende Seitenfläche zu einer Unterseite des Werkstücks. Während eines Arbeitsschritts ist bevorzugt die Oberseite des Werkstücks prozessierbar. Für eine Prozessierung auch der Unterseite des Werkstücks wird das Werkstück nach der Prozessierung der Oberseite bevorzugt mit einem sogenannten Schmetterlingswender (bestehend aus zwei sich nicht überlappenden Auflagen) oder einem sogenannten Eintischwender (bestehend aus zwei sich überlappenden Auflagen) gewendet. Als Längsseiten des flach gelagerten Werkstücks werden im Folgenden jene Seiten des Werkstücks angesehen, die sich überwiegend in der Längsrichtung der Werkstückbearbeitungsanlage erstrecken. Als Querseiten des flach gelagerten Werkstücks werden jene Seiten des Werkstücks angesehen, die sich überwiegend in der Querrichtung der Werkstückbearbeitungsanlage erstrecken.

Unter dem Prozessieren eines Werkstücks werden folgende Arbeitsschritte am Werkstück verstanden:
- Befestigen (Schrauben, Klammern, Nageln, Kleben)
- Bearbeiten (Fräsen, Sägen, Bohren)
- Beschriften (Markieren, Zeichnen)
- Prüfen (Scannen, Vermessen)

Unter der Bewegungseinheit wird jegliche mobile Werkzeugvorrichtung wie beispielsweise ein Bearbeitungsportal oder ein Bearbeitungsroboter verstanden, die mit dem Lagerungssystem interagieren kann und die mit dem Werkzeugaggregat das Werkstück, insbesondere die Oberseite aber auch die Seitenflächen des Werkstücks prozessieren kann. Bevorzugt ist die Bewegungseinheit derart gestaltet, dass diese die gesamte Fläche der Oberseite des Werkstücks und alle Seitenflächen des Werkstücks prozessieren kann. Insbesondere liegt die maximale Bewegungsgeschwindigkeit der Bewegungseinheit im Bereich von 20 - 60 Metern pro Minute.

Unter dem Lagerungssystem wird jegliches Magazin verstanden, welches entlang des Werkstücks bewegbar ist. An dem Lagerungssystem ist bevorzugt ein Werkzeugaggregat in einem Lagerplatz lagerbar, weiter bevorzugt zwei bis acht Werkzeugaggregate in entsprechenden Lagerplätzen lagerbar. Es ist auch möglich, dass das Lagerungssystem derart gestaltet ist, dass mehr als acht Werkzeugaggregate in entsprechenden Lagerplätze lagerbar sind. Das Lagerungssystems und die Lagerplätze sind derart gestaltet und angeordnet, um eine Interaktion mit der Bewegungseinheit zu ermöglichen. Insbesondere liegt die maximale Bewegungsgeschwindigkeit des Lagerungssystems im Bereich von 50 - 100 Metern pro Minute. Somit kann sich das Lagerungssystem bevorzugt schneller als die Bewegungseinheit bewegen.

Gemäß einer bevorzugten Ausführungsform umfasst die Werkstückbearbeitungsanlage mindestens eine Bewegungsstruktur. Die Bewegungsstruktur erstreckt sich entlang der Längsrichtung der Werkstückbearbeitungsanlage. Auf der Bewegungsstruktur ist bzw. sind die Bewegungseinheit und/oder das Lagerungssystem beweglich gelagert.

Eine Werkstückbearbeitungsanlage mit der mindestens einen Bewegungsstruktur ist vorteilhaft, da sich die Präzision der Bewegungen der Bewegungseinheit und/oder des Lagerungssystems verbessert. Mit der Bewegungsstruktur können somit Ungenauigkeiten vermieden werden, die ansonsten insbesondere bei der Aufnahme und der Ablage eines Werkzeugaggregats auftreten und zu Problemen führen könnten. Außerdem sollen mit der Bewegungsstruktur Ungenauigkeiten bei der Prozessierung des Werkstücks vermieden werden. Insbesondere liegt der besondere Vorteil der Erfindung im Gegensatz zum Stand der Technik folglich darin, dass die Bewegungsstruktur jeweils eine präzise vordefinierte Positionierung des Lagerungssystems und/oder der Bewegungseinheit ermöglicht.

Unter der Bewegungsstruktur wird jegliche Struktur verstanden, auf welchem das Lagerungssystem und/oder die Bewegungseinheit in der Längsrichtung entlang des Werkstücks bevorzugt zwangsgeführt bewegbar ist bzw. sind. Die Bewegungsstruktur kann z.B. ein Boden einer Halle sein, in der die Werkstückbearbeitungsanlage steht. Als Bewegungsstruktur sind bevorzugt auch mindestens eine Schiene oder ein Fahrweg möglich, die bevorzugt eine Führung des Lagerungssystems und/oder der Bewegungseinheit ermöglichen. Die Bewegungsstruktur erstreckt sich bevorzugt in der Längsrichtung der Werkstückbearbeitungsanlage. Die Länge der Bewegungsstruktur wird bevorzugt nach einer größtmöglichen Länge des Werkstücks ausgewählt und übertrifft diese Länge bevorzugt um mindestens zwei Meter, so dass sich sowohl die Bewegungseinheit als auch die Lagerungsstation über das Ausmaß des Werkstücks hinausbewegen können. Die Länge der Bewegungsstruktur kann sich alternativ entlang mehrerer nacheinander angeordneter Auflageflächen für das Werkstück mit jeweils zugeordneten Bewegungseinheiten oder entlang eine einzige langgestreckte Auflagefläche, auf der mehrere Werkstücke hintereinander liegend Platz finden und von jeweils einer zugeordneten Bewegungseinheit prozessiert werden können, erstrecken. Derartige Anordnungen sind ebenfalls unter der Werkstückbearbeitungsanlage zu verstehen.

Gemäß einer bevorzugten Ausführungsform umfasst das Lagerungssystem eine Antriebseinheit. Das Lagerungssystem ist mit der Antriebseinheit in Relation zur Bewegungseinheit bewegbar, um sich der Bewegungseinheit zu nähern oder um sich von der Bewegungseinheit zu entfernen. Alternativ kann das Lagerungssystem von einem Bediener der Werkstückbearbeitungsanlage bewegt werden, soweit sich der Bediener außerhalb des Gefahrenbereichs der Bewegungseinheit bewegen kann.

Um eine automatisierte Bewegung des Lagerungssystems zu ermöglichen, umfasst das Lagerungssystem die Antriebseinheit. Zur Aufnahme oder Ablage des Werkzeugaggregats durch die Aufnahmeeinheit bedarf es einer präzisen Positionierung des Lagerungssystems in Relation zur Bewegungseinheit. Insbesondere liegt der besondere Vorteil der Erfindung darin, dass die erfindungsgemäße Antriebseinheit eine präzise Bewegung und Positionierung des Lagerungssystem entlang der Bewegungsstruktur ermöglicht, um wiederum bevorzugt eine störungsfreie Aufnahme eines Werkzeugaggregats aus dem Lagerungssystem oder Ablage eines Werkzeugaggregats in das Lagerungssystem zu ermöglichen.

Unter der Antriebseinheit wird jegliche beispielsweise elektrisch oder pneumatisch wirkende Einheit verstanden, mit der das Lagerungssystem bewegbar ist, insbesondere in der Längsrichtung bewegbar ist. In einer solchen Einheit können beispielsweise Getriebe, Wälzlager, Gleitlager, Zahnräder, Reibräder, Riemen (Treibriemen), Ketten oder Riemenscheiben von Zugmitteltrieben zum Einsatz kommen.

Gemäß einer weiter bevorzugten Ausführungsform umfasst die Werkstückbearbeitungsanlage mindestens ein Sensorelement. Das mindestens eine Sensorelement ist konfiguriert eine räumliche Anordnung der Bewegungseinheit und dem Lagerungssystem wahrzunehmen. Das mindestens eine Sensorelement kann hierbei bevorzugt am Lagerungssystem und/oder an der Bewegungseinheit angeordnet sein. Alternativ können mehrere Sensorelemente seitlich an der Auflagefläche in der Längsrichtung der Werkstückbearbeitungsanlage angeordnet sein und koordiniert die jeweiligen Positionen der Bewegungseinheit und dem Lagerungssystem ausmessen.

Insbesondere ist durch das mindestens eine Sensorelement möglich, bevorzugt den Abstand zwischen bzw. die relative Position von dem Lagerungssystem und/oder der Bewegungseinheit zu messen.

Die Messung der relativen Position zwischen dem Lagerungssystem und der Bewegungseinheit erfolgt dabei bevorzugt von einer stationären Position der Werkstückbearbeitungsanlage, so dass durch eine Bewegung des Sensorelements selbst keine Ungenauigkeiten bei der Messung verursacht werden können.

Unter einem Sensorelement wird jeglicher Sensor oder Messfühler verstanden, welcher eine physikalische Größe erkennt und diese in ein Signal umwandelt, um eine räumliche Anordnung von der Bewegungseinheit und dem Lagerungssystem feststellen zu können. Insbesondere sind Abstandsensoren bevorzugt, welche elektromagnetische Wellen oder akustische Wellen aussenden und wieder empfangen, um anhand einer Laufzeitmessung der elektromagnetischen Wellen oder akustischen Wellen eine räumliche Anordnung bzw. einen Abstand festzustellen. Ferner ist es möglich Sensoren einzusetzen, welche Farbmuster erkennen, um eine Positionsmessung z.B. anhand von Magnetbändern oder Strichcodes entlang der Bewegungsstruktur zu ermöglichen.

Gemäß einer bevorzugten Ausführungsform umfasst die Antriebseinheit des Lagerungssystems wenigstens einen motorischen Antrieb und wenigstens ein Kraftübertragungsmittel. Gemäß einer weiteren bevorzugten Ausführungsform umfasst die Antriebseinheit ferner wenigstens zwei Bewegungselemente, die insbesondere auf der mindestens einen Bewegungsstruktur (50) geführt bewegbar sind, um die Bewegung des Lagerungssystems entlang der mindestens einen Bewegungsstruktur zu ermöglichen.

Dadurch, dass das Lagerungssystem den motorischen Antrieb und das Kraftübertragungsmittel umfasst, ist das Lagerungssystem entlang der Bewegungsstruktur exakt positionierbar. In einer Ausführungsform könnte als Kraftübertragungsmittel ein Ritzel verwendet werden, dass neben der Bewegungsstruktur in eine parallel zur Bewegungsstruktur orientierte stationäre Zahnstange eingreift und somit beispielsweise einen Schlitten über eine Schiene verfährt.

Die mindestens zwei Bewegungselemente ermöglichen zum einen eine geführte Bewegung auf der Bewegungsstruktur und zum anderen eine möglichst kippfreie Bewegung. In einer weiter bevorzugten Ausführungsform umfasst der motorische Antrieb ein weiteres Bewegungselement oder zwei weitere Bewegungselemente die seitlich neben den mindestens zwei Bewegungselementen angeordnet sind und bevorzugt ebenfalls eine geführte Bewegung auf der Bewegungsstruktur ermöglichen.

Unter einem motorischen Antrieb wird jeglicher Antrieb oder Aktor verstanden, mit dem die Antriebskraft erzeugt wird. Insbesondere ist der motorische Antrieb als elektrischer Antrieb, als pneumatischer Antrieb, als mechanischer Antrieb, oder als hydraulischer Antrieb ausgebildet. Weiter bevorzugt ist der motorische Antrieb als elektrischer Servomotor oder als elektrischer Schrittmotor ausgebildet, um eine exakte bzw. präzise Bewegung zu ermöglichen.

Unter einem Kraftübertragungsmittel wird jegliches Mittel verstanden, mit dem die Kraft des motorischen Antriebs übertragen werden kann. Insbesondere ist das Kraftübertagungsmittel als Zahnriemen, als Zahnrad, als Kette, oder als Zahnstange, ausgebildet.

Unter einem Bewegungselement wird jegliches Element verstanden, dessen Form, insbesondere dessen Profil, mit der Bewegungsstruktur übereinstimmt und auf der Bewegungsstruktur bewegbar ist. Insbesondere sind die Bewegungselemente als Laufräder, als Laufrolle, als Führungswagen, als Kugellager, oder als Gleitlager ausgebildet. Durch die Bewegungselemente ist das Lagerungssystem auf der Bewegungsstruktur bevorzugt in der Längsrichtung geführt bewegbar.

Gemäß einer bevorzugten Ausführungsform umfasst die Werkstückbearbeitungsanlage ferner ein Anlagensteuerungssystem. Das Anlagensteuerungssystem ist zur koordinierten Steuerung der Bewegungseinheit und des Lagerungssystems vorgesehen, so dass die Bewegungseinheit und das Lagerungssystem in zumindest eine Interaktionsposition bewegbar sind. In der Interaktionsposition befindet sich die Bewegungseinheit benachbart zum Lagerungssystem, um zwischen der Bewegungseinheit und dem Lagerungssystem eine Interaktion zu ermöglichen.

Unter einem Anlagensteuerungssystem wird jegliches System verstanden, mit dem die Werkstückbearbeitungsanlage gesteuert werden kann. Insbesondere handelt es sich bei dem Anlagensteuerungssystem um ein CNC-Steuerung und/oder eine SPS-Steuerung und/oder eine PLC-Steuerung. Insbesondere wird mit der CNC-Steuerung die Prozessierung des Werkstücks durch die Bewegungseinheit gesteuert. Die SPS-Steuerung und/oder die PLC-Steuerung sind bevorzugt industrielle Steuerungscomputer, welche die Koordination der Bewegungen der Anlagenkomponenten der Werkstückbearbeitungsanlage übernehmen.

Unter der Interaktionsposition wird jegliche Position verstanden, in der die Interaktion zwischen dem Lagerungssystem und der Bewegungseinheit ermöglicht wird. Insbesondere ist es möglich, dass in der Interaktionsposition die Bewegungseinheit mit der Aufnahmeeinheit ein Werkzeugaggregat aus dem Lagerungssystem durch stetig angepasste bzw. nachgeführte Aufenthaltsorte von Bewegungseinheit und Lagerungssystem mit dem Ziel einer möglichst geringen Entfernung zwischen Bewegungseinheit und Lagerungssystem beschleunigt aufnehmen oder ablegen kann. Beschleunigt bedeutet in diesem Fall, dass die Aufnahme oder Ablage eines Werkzeugaggregats mit der erfindungsgemäßen Werkstückbearbeitungsanlage schneller erfolgt als mit herkömmlichen Anlagen dieser Art.

Gemäß einer bevorzugten Ausführungsform umfasst die Werkstückbearbeitungsanlage eine Kommunikationsverbindung zwischen dem mindestens einen Sensorelement und dem Anlagensteuerungssystem. Durch die Kommunikationsverbindung können Informationen des mindestens einen Sensorelements, insbesondere Sensor- und Messsignale, kommuniziert werden.

In einer weiteren bevorzugten Ausführungsform ist die Werkstückbearbeitungsanlage eingerichtet, über die Kommunikationsverbindung und/oder eine weitere Kommunikationsverbindung bevorzugt Steuersignale von dem Anlagensteuerungssystem an das Lagerungssystem und/oder die Bewegungseinheit zu kommunizieren.

Steuersignale sind bevorzugt Signale, die das Anlagensteuerungssystem sendet, um die Bewegungen der Anlagenkomponenten der Werkstückbearbeitungsanlage zu steuern. Sensor- und Messsignale sind bevorzugt Signale, die die Sensoreinheit sendet, um dem Anlagensteuerungssystem zu ermöglichen, einen Zustand wie insbesondere eine Position einer Anlagenkomponente zu überwachen.

Unter einer Kommunikationsverbindung wird jegliche drahtgebundene oder drahtlose Verbindung verstanden, die Informationen, bevorzugt Signale, weiter bevorzugt digitale Signale oder analoge Signale, übermitteln kann.

Gemäß einer bevorzugten Ausführungsform ist an der Bewegungseinheit und/oder dem Lagerungssystem mindestens eine Messfläche für das mindestens eine Sensorelement ausgebildet. Durch die Messfläche wird eine Abstandsmessung zwischen dem Lagerungssystem und der Bewegungseinheit ermöglicht. Insbesondere misst das mindestens eine Sensorelement den Abstand zwischen der Bewegungseinheit und dem Lagerungssystem, indem das Sensorelement bevorzugt eine elektromagnetische oder akustische Wellen aussendet, wobei diese Wellen von der Messfläche reflektiert werden und die reflektierten Wellen von dem Sensorelement wieder empfangen werden.

Unter einer Messfläche wird jegliche Fläche verstanden, die sich besonders gut dazu eignet, insbesondere elektromagnetische oder akustische Wellen des Sensorelements an das Sensorelement durch einen möglichst großen Reflexionskoeffizienten bzw. Reflexionsfaktor zurückzusenden. Die Messfläche ist bevorzugt eine ebene Fläche oder eine konkave Fläche wie bei einem Hohlspiegel, welche an dem Lagerungssystem oder der Bewegungseinheit abschattungsfrei (d.h. ohne störende Hindernisse zwischen dem Sensorelement und der Messfläche) ausgebildet ist. Insbesondere ist die Messfläche in einem rechten Winkel zur Aussendungsrichtung der elektromagnetischen oder akustischen Wellen ausgerichtet, um die Wellen optimal zurück an das Sensorelement zu reflektieren.

Gemäß einer bevorzugten Ausführungsform ist das Lagerungssystem derart ausgebildet, dass das Lagerungssystem über das Werkstück bewegt werden kann oder dass das Lagerungssystem seitlich das Werkstück passieren kann.

Das Lagerungssystem, welches über das Werkstück bewegbar ist, kann mit bevorzugt einer Bewegungseinheit, weiter bevorzugt mit zwei Bewegungseinheiten interagieren. Das Lagerungssystem und die Bewegungseinheit sind vorteilhaft auf derselben Bewegungsstruktur bewegbar.

Das Lagerungssystem, welches das Werkstück seitlich passieren kann, kann mit mehr als zwei Bewegungseinheiten interagieren, wobei das Lagerungssystem von einem Ende der Werkstückbearbeitungsanlage zum anderen Ende der Werkstückbearbeitungsanlage und bevorzugt darüber hinaus zu einer weiteren Werkstückbearbeitungsanlage bewegbar ist.

Gemäß einer bevorzugten Ausführungsform sind die Aufnahmeeinheit und das Lagerungssystem derart gestaltet und konfiguriert, dass das Werkzeugaggregat oberhalb, insbesondere vertikal oberhalb, oder seitlich, insbesondere in einer Querrichtung der Werkstückbearbeitungsanlage seitlich, des Werkstücks mit der Aufnahmeeinheit koppelbar oder entkoppelbar ist.

Eine derartige Gestaltung und Konfiguration des Lagerungssystems und der Aufnahmeeinheit ermöglichen es, dass das Werkzeugaggregat und die Aufnahmeeinheit an einem beliebigen Abschnitt entlang der Längsrichtung der Werkstückbearbeitungsanlage miteinander koppelbar oder entkoppelbar sind. Die Interaktion, insbesondere die Kopplung oder Entkopplung, zwischen der Aufnahmeeinheit und dem Werkzeugaggregat, ist somit unabhängig von der Größe des Werkstücks möglich.

Eine Kopplung oder Entkopplung oberhalb des Werkstücks bedeutet, dass die Kopplung oder Entkopplung vertikal oberhalb der Oberseite des Werkstücks stattfindet.

Eine Kopplung oder Entkopplung seitlich des Werkstücks bedeutet, dass die Kopplung oder Entkopplung neben einer der Seitenflächen des Werkstücks stattfindet.

Gemäß einer bevorzugten Ausführungsform weist die Aufnahmeeinheit ein erstes Kupplungselement auf und das Werkzeugaggregat weist ein zweites Kupplungselement auf. Durch das erste Kupplungselement der Aufnahmeeinheit und durch das zweite Kupplungselement des Werkzeugaggregats sind die Aufnahmeeinheit und das Werkzeugaggregat insbesondere in einer Koppelstellung koppelbar oder entkoppelbar.

Unter Kupplungselementen werden jegliche Elemente verstanden, die derart gestaltet sind, um eine Kopplung oder Entkopplung miteinander zu ermöglichen. In einem gekoppelten Zustand bilden die Kupplungselemente bevorzugt eine formschlüssige Verbindung. Der gekoppelte Zustand der Kupplungselemente ist insbesondere durch einen Impuls, insbesondere durch einen pneumatischen oder einen elektrischen oder einen hydraulischen Impuls, lösbar.

Gemäß einer bevorzugten Ausführungsform weist das Lagerungssystem eine Lagerungsstruktur und wenigstens eine Stütze, bevorzugt eine erste und eine zweite Stütze, als Grundstruktur auf. An der Lagerungsstruktur ist der wenigstens eine Lagerplatz angeordnet. An der wenigstens einen Stütze liegt die Lagerungsstruktur auf. Soweit bei einem Ausführungsbeispiel Bewegungselemente vorhanden sind, sind die Bewegungselemente der Antriebseinheit bevorzugt an der Stütze, bevorzugt am unteren Ende der Stütze, angeordnet.

Durch das Lagerungssystem, welches die Lagerungsstruktur und die wenigstens eine Stütze als Grundstruktur aufweist, ist eine Kopplung der Kupplungselemente besonders einfach möglich. Ferner ist durch die Anordnung der Bewegungselemente an der Stütze des Lagerungssystems eine besonders energiesparende Fortbewegung des Lagerungssystems möglich.

Die Lagerungsstruktur hat bevorzugt die Form eines Trägerbalkens, wobei der Trägerbalken länglich ausgebildet ist und sich bevorzugt entlang der Querrichtung, weiter bevorzugt entlang der Längsrichtung, erstreckt. Der Trägerbalken liegt bevorzugt auf zwei Stützen auf, sodass eine portalförmige Gesamtstruktur entsteht. Lagerplätze für die Werkzeugaggregate sind bevorzugt entlang des Trägerbalkens nebeneinander angeordnet.

Die Lagerungsstruktur hat bevorzugt alternativ die Form eines kreisförmigen Karussells. Das kreisförmige Karussell ist bevorzugt drehbar auf einer Stütze gelagert. Insbesondere ist das kreisförmige Karussell durch einen motorischen Antrieb drehbar gelagert. Lagerplätze für die Werkzeugaggregate sind auf dem kreisförmigen Karussell bevorzugt kreisförmig nebeneinander angeordnet.

Unter der wenigstens einen Stütze wird jegliche Stützstruktur verstanden, auf der die Lagerungsstruktur des Lagerungssystems auflegbar und montierbar oder alternativ beispielsweise angeschweißt ist. Die Stütze erstreckt sich bevorzugt in der vertikalen Richtung, wobei das untere Ende der Stütze auf der Bewegungsstruktur bewegbar gelagert ist.

Gemäß einer bevorzugten Ausführungsform sind zumindest zwei Bewegungselemente an der ersten Stütze und zumindest zwei weitere Bewegungselemente an der zweiten Stütze angeordnet und es werden folgende bevorzugte Konfigurationen ermöglicht: Die mindestens eine Bewegungsstruktur ist entweder eine Fahrschiene, wobei die Bewegungselemente, die an der ersten Stütze angeordnet sind, eingerichtet sind, sich auf der Fahrschiene zu bewegen, wobei die Bewegungselemente, die an der zweiten Stütze angeordnet sind, eingerichtet sind, sich ebenfalls auf der Fahrschiene zu bewegen. Die mindestens eine Bewegungsstruktur wird alternativ durch eine erste Fahrschiene und eine zweite Fahrschiene gebildet, wobei die Bewegungselemente der ersten Stütze eingerichtet sind, sich auf der ersten Fahrschiene zu bewegen und die Bewegungselemente der zweiten Stütze eingerichtet sind, sich auf der zweiten Fahrschiene zu bewegen.

Die beiden Konfigurationen des Lagerungssystems haben unterschiedliche Vorteile. Durch die Konfiguration, bei welcher sich alle Bewegungselemente auf einer Fahrschiene bewegen, wird ermöglicht, dass das Lagerungssystem eine besonders kompakte Form hat und dementsprechend wenig Raum innerhalb der Werkstückbearbeitungsanlage in Anspruch nimmt. Durch die Konfiguration, bei welcher sich die Bewegungselemente auf einer ersten und einer zweiten Fahrschiene bewegen, und die beiden Fahrschienen mit einem vordefinierten Abstand in der Querrichtung von bevorzugt 0,5 m bis 4,5 m, insbesondere parallel, zueinander angeordnet, wird es ermöglicht, dass in dem Lagerungssystem mehr Werkzeugaggregate in Lagerplätzen aufnehmbar sind, die bevorzugt in mindestens zwei Reihen aufgereiht sind.

Gemäß einer bevorzugten Ausführungsform umfasst der Lagerplatz eine Aufnahmevorrichtung, bevorzugt zwei Aufnahmevorrichtungen und das Werkzeugaggregat umfasst eine Stützvorrichtung. Durch die Aufnahmevorrichtung(en) und die Stützvorrichtung wird ein Lagern des Werkzeugaggregats im Lagerplatz ermöglicht. In jeweils einer Aufnahmevorrichtung des Lagerplatzes kann bevorzugt jeweils ein Werkzeugaggregat gelagert werden. Insbesondere sind in einem Lagerplatz zwei Werkzeugaggregate lagerbar.

Unter einer Aufnahmevorrichtung wird jegliche Vorrichtung verstanden, mit welcher ein Werkzeugaggregat aufnehmbar ist. Dies ist z.B. ein senkrecht an der Lagerungsstruktur angeordneter Stift.

Unter einer Stützvorrichtung wird jegliche Vorrichtung am Werkzeugaggregat verstanden, mit welcher das Werkzeugaggregat in der Aufnahmevorrichtung gelagert werden kann. Die ist z.B. eine Buchse, die auf den Stift aufgesetzt werden kann und somit einen oberen Teil des Stifts umschließen kann.

Gemäß einer bevorzugten Ausführungsform umfasst die Aufnahmevorrichtung mindestens zwei Aufnahmepunkte, insbesondere drei Aufnahmepunkte. Auch möglich ist, dass die Aufnahmevorrichtung nur einen Aufnahmepunkt umfasst. Die Stützvorrichtung umfasst mindestens zwei Stützpunkte, insbesondere drei Stützpunkte. Auch möglich ist, dass die Stützvorrichtung nur einen Stützpunkt umfasst. Die Aufnahmepunkte und die Stützpunkte sind derart gestaltet und angeordnet, um eine formschlüssige und lösbare Verbindung zwischen dem Werkzeugaggregat und dem Lagerplatz zu ermöglichen. Insbesondere sind die Aufnahmepunkte kugelförmig Elemente, bevorzugt kegelförmige Element, welche mit den Stützpunkten in Eingriff gebracht werden können, wobei bevorzugt je ein Aufnahmepunkt mit je einem Stützpunkt in Eingriff gebracht werden kann. Die Stützpunkte sind nach unten geöffnete Hülsenelemente, wobei die Hülsenelemente jeweils ein kugelförmiges Element, bevorzugt ein kegelförmiges Element, formschlüssig aufnehmen können.

Gemäß einer bevorzugten Ausführungsform umfasst die Aufnahmevorrichtung eine Ausrichteinheit und die Aufnahmeeinheit eine Einstelleinheit. Mit der Ausrichteinheit und der Einstelleinheit sind Kupplungskontaktoberflächen der Kupplungselemente, insbesondere des ersten und des zweiten Kupplungselements, derart einstellbar, um die Kopplung oder Entkopplung des ersten und zweiten Kupplungselements in der Koppelstellung zu ermöglichen. Unter einer Ausrichteinheit wird jegliche Einheit verstanden, mit welcher die Kupplungskontaktoberfläche des zweiten Kupplungselements ausrichtbar ist. Unter einer Einstelleinheit wird jegliche Einheit verstanden, mit welcher die Kupplungskontaktoberfläche des ersten Kupplungselements einstellbar ist.

Gemäß einer bevorzugten Ausführungsform ist das Lagerungssystem als fahrerloses Transportfahrzeug ausgestaltet. Das fahrerlose Transportfahrzeug umfasst Sensorik, bevorzugt Bildverarbeitungssensoren, weiter bevorzugt Kameras, um sich in einem Bewegungsraum innerhalb der Werkstückbearbeitungsanlage, der durch die Bewegungsstruktur gebildet wird, zu orientieren. Der Bewegungsraum entspricht bevorzugt einem Raum, in welchem das Lagerungssystem bewegbar ist und in welchem das Lagerungssystem mit der Bewegungseinheit interagieren kann.

In einer weiteren bevorzugten Ausführungsform umfasst das Lagerungssystem eine Steuerungseinrichtung in Form einer künstlichen Intelligenz. Die künstliche Intelligenz führt dabei mit Hilfe der Sensoren einen Lernprozess durch, um selbständig die Umgebung der Werkstückbearbeitungsanlage zu erfassen und abzuspeichern und um bevorzugt den schnellsten Weg zu überwinden, um für einen Austausch der Werkzeugaggregate bei der Werkstückbearbeitungsanlage bereitzustehen.

Mit derartigen Lagerungssystemen ist ein intelligenter und vorausschauender Austausch der Werkzeugaggregate in einer digitalen Fertigung möglich, bei der die Lagerungssysteme nicht an durch Schienen vordefinierte Fahrwege gebunden sind. In einer digitalen Fertigung wird unter Einbindung von vernetzten Sensoren eine vollautomatisierte Kommunikation und Koordination der Fertigungsschritte ermöglicht. Insbesondere sind durch die Nutzung von Datenmanagementlösungen Werkzeugdaten der Werkzeugaggregate in Echtzeit erfassbar. Die Werkzeugdaten der Werkzeugaggregate und die Bewegungsdaten der Bewegungseinheit können dem Lagerungssystem beispielsweise über eine Cloud, insbesondere eine internetbasierte Datenbank, zur Verfügung gestellt werden, wobei das Lagerungssystem anhand der Informationen aus der Cloud und Sensordaten der eigenen Sensorik smarte Entscheidungen zum Austausch von Werkzeugaggregaten treffen kann.

Der Bildverarbeitungssensor erzeugt bevorzugt anhand einer Kameralinse, welche Lichtintensität und Farbinformationen der Umgebung erfasst, ein digitales Signal in Form eines Kamerabildes. Der Bildverarbeitungssensor leitet das erzeugte digitale Signal an die Steuerungseinrichtung in Form einer künstlichen Intelligenz weiter, wobei diese das digitale Signal auswertet.

Gemäß einer bevorzugten Ausführungsform umfasst die Werkstückbearbeitungsanlage ferner mindestens eine zweite Bewegungseinheit. Die Bewegungseinheit und die mindestens eine zweite Bewegungseinheit sind bevorzugt gleichartig ausgebildet. Das Lagerungssystem ist derart ausgebildet, um sich der Bewegungseinheit oder der mindestens einen zweiten Bewegungseinheit zu nähern oder sich zu entfernen und mit der Bewegungseinheit oder der mindestens einen zweiten Bewegungseinheit zu interagieren.

Ein solche Ausführungsform ermöglicht einen materiellen Kostenvorteil, da nicht für jede Bewegungseinheit ein separates Lagerungssystem benötigt wird. Es ist somit möglich, dass die zwei oder mehr Bewegungseinheiten aus dem bewegbaren Lagerungssystem Werkzeugaggregate aufnehmen oder ablegen können. Insbesondere im industriellen Fertighausbau, in dem mehrere Bewegungseinheiten einzelne Arbeitsschritte ausführen, ist es vorteilhaft, dass mehreren Bewegungseinheiten nur ein Lagerungssystem zugeordnet ist. Das Lagerungssystem bewegt sich hierbei zwischen den Bewegungseinheiten, ohne diese in der Bewegungsfreiheit zu stören, wobei die Bewegungseinheiten nacheinander Werkzeugaggregate aus dem Lagerungssystem aufnehmen oder ablegen können. Der materielle Kostenvorteil der Erfindung im Gegensatz zum Stand der Technik ergibt sich folglich, da in einer derartigen Werkstückfertigung weniger Lagerungssysteme notwendig sind.

Gemäß weiter bevorzugter Ausführungsformen ist die Bewegungseinheit entweder ein Bearbeitungsportal oder ein Knickarmroboter.

Die Bewegungseinheit in Form eines Bearbeitungsportals ist besonders vorteilhaft, um besonders große bzw. ausladende Holzrahmenelemente zu prozessieren (z.B. mit 6 Metern in der Länge, 3 Metern in der Höhe und 20 cm in der Tiefe). Wie bereits in einem vorherigen Abschnitt erwähnt, wird das Werkstück zur Prozessierung flach gelagert, so dass sich das Werkstück insbesondere in der Querrichtung der Werkstückbearbeitungsanlage um mehrere Meter erstrecken kann. Das Bearbeitungsportal umfasst bevorzugt eine portalförmige Grundstruktur, mit einem in der Querrichtung ausgerichteten Querträger und zwei in der vertikalen Richtung ausgerichteten Ständern. Am Querträger ist die Aufnahmeeinheit angeordnet, welche in der Querrichtung beweglich gelagert ist. Ein Bearbeitungsportal besitzt auf Grund seiner Form selbst bei einer Länge des Querträgers im Bereich von 5 Metern eine hohe Prozessierungssteifigkeit und ermöglicht so ein hohe Prozessierungsqualität selbst bei besonders großen ausladenden Werkstücken zu garantieren.

Die Bewegungseinheit in Form eines Knickarmroboters ist deswegen vorteilhaft, da ein Knickarmroboter, auf Grund seiner Bewegungsfreiheit, in einer Fertigung sehr flexibel einsetzbar ist. Neben der Prozessierung eines Werkstücks kann ein Knickarmroboter auch Handhabungsaufgaben übernehmen. Des Weiteren sind mit einem Knickarmroboter, auf Grund dessen Bewegungsfreiheit, komplizierte Arbeitsschritte am Werkstück realisierbar. Der Knickarmroboter bewegt sich mit bevorzugt fünf, weiter bevorzugt sechs, weiter bevorzugt sieben Bewegungsachsen. Unter komplizierten Arbeitsschritten werden bevorzugt Arbeitsschritte verstanden, bei denen das Werkzeugaggregat in Relation zum Werkstück einen bestimmten Winkel einnimmt. Vorteilhaft an einem Knickarmroboter ist ferner, dass der Knickarmroboter einen kleinen Platzbedarf hat und sich bevorzugt auf nur einer Fahrschiene bewegen kann.

Die Erfindung betrifft ferner ein Verfahren zum Prozessieren eines Werkstücks insbesondere mit einer Werkstückbearbeitungsanlage nach einer der zuvor beschriebenen Ausführungsformen. Das Verfahren umfasst die folgenden Schritte:
- Bewegen einer Bewegungseinheit, an der eine Aufnahmeeinheit für ein Werkzeugaggregat zum Prozessieren eines Werkstücks angeordnet ist, entlang einer Längsrichtung der Werkstückbearbeitungsanlage, und
- Bewegen eines Lagerungssystem mit wenigstens einem Lagerplatz für das Werkzeugaggregat unabhängig oder abhängig von dem Bewegen der Bewegungseinheit insbesondere zum jeweiligen Aufenthaltsort der Bewegungseinheit, wobei das Bewegen des Lagerungssystems bevorzugt in einer horizontalen Ebene erfolgt.

Durch das unabhängige Bewegen des Lagerungssystems und der Bewegungseinheit wird die Fertigungseffizienz der Werkstückbearbeitungsanlage gesteigert. Insbesondere ist durch die Beweglichkeit des Lagerungssystems das Lagerungssystem durch die Bewegungseinheit schneller erreichbar.

Gemäß einer weiteren bevorzugten Ausführungsform des Verfahrens erfolgt das Bewegen der Bewegungseinheit mittels einer Bewegungsstruktur. Insbesondere erfolgt das Bewegen der Bewegungseinheit mittels mindestens einer Schiene. Das Bewegen des Lagerungssystems erfolgt mittels der Bewegungsstruktur oder einer weiteren Bewegungsstruktur. Insbesondere erfolgt das Bewegen des Lagerungssystems mittels mindestens einer weiteren Schiene.

Durch das Bewegen der Bewegungseinheit mittels der Bewegungsstruktur verbessert sich die Bewegungspräzision der Bewegungseinheit. Durch das Bewegen des Lagerungssystems mittels der Bewegungsstruktur verbessert sich ebenso die Bewegungspräzision des Lagerungssystems.

Gemäß einer weiteren bevorzugten Ausführungsform des Verfahrens sind die Bewegungseinheit und das Lagerungssystem durch das Bewegen des Lagerungssystems in eine erste frei definierbare Interaktionsposition bringbar, in der die Bewegungseinheit und das Lagerungssystem interagieren können. Durch das Bewegen des Lagerungssystems und folglich dem Erreichen der Interaktionsposition, ist im Gegensatz zum Stand der Technik eine beschleunigte Interaktion zwischen dem Lagerungssystem und der Bewegungseinheit möglich.

Gemäß einer weiteren bevorzugten Ausführungsform umfasst das Verfahren ferner die folgenden Schritte:
- Bewegen der Aufnahmeeinheit nach Erreichen der ersten Interaktionsposition in eine Koppelstellung mit dem Lagerungssystem, und
- Transferieren des Werkzeugaggregats von dem Lagerungssystem zur Bewegungseinheit oder von der Bewegungseinheit zum Lagerungssystem.

Durch das Bewegen der Aufnahmeeinheit in die Koppelstellung an der ersten frei definierbaren Interaktionsposition, kann im Gegensatz zum Stand der Technik der Austausch des Werkzeugaggregats an verschiedenen Stellen in Längsrichtung der Werkstückbearbeitungsanlage stattfinden.

Gemäß einer weiteren bevorzugten Ausführungsform umfasst das Verfahren ferner die folgenden Schritte:
- Prozessieren des Werkstücks mit dem Werkzeugaggregat,
- Bewegen der Bewegungseinheit und des Lagerungssystems in eine zweite Interaktionsposition entlang der Längsrichtung der Werkstückbearbeitungsanlage, in der die Bewegungseinheit und das Lagerungssystem interagieren können, und
- Transferieren des Werkzeugaggregats von der Bewegungseinheit zum Lagerungssystem oder eines weiteren Werkzeugaggregats von dem Lagerungssystem zur Bewegungseinheit oder von der Bewegungseinheit zum Lagerungssystem, und bevorzugt
- weiteres Prozessieren des Werkstücks mit dem weiteren Werkzeugaggregat.

Durch die Beweglichkeit des Lagerungssystems und folglich der Möglichkeit, dass das Lagerungssystem und die Bewegungseinheit in einer weiteren Interaktionsposition interagieren können, ist, im Gegensatz zum Stand der Technik, ein weiteres Werkzeugaggregat beschleunigt von dem Lagerungssystem an die Bewegungseinheit oder in umgekehrter Richtung transferierbar.

Gemäß einer weiteren bevorzugten Ausführungsform umfasst das Verfahren ferner die folgenden Schritte:
- Bewegen einer weiteren Bewegungseinheit an der eine Aufnahmeeinheit für ein Werkzeugaggregat zum Prozessieren des Werkstücks oder eines weiteren Werkstücks angeordnet ist in eine dritte Interaktionsposition,
- Bewegen des Lagerungssystems zu der weiteren Bewegungseinheit, in die dritte Interaktionsposition, in der die weitere Bewegungseinheit und das Lagerungssystem interagieren können,
- Transferieren des Werkzeugaggregats oder eines noch weiteren Werkzeugaggregats zwischen dem Lagerungssystem und der weiteren Bewegungseinheit, und
- Prozessieren des Werkstücks oder eines weiteren Werkstücks mit dem noch weiteren Werkzeugaggregat.

Durch die Beweglichkeit des Lagerungssystems und folglich der Möglichkeit, dass das Lagerungssystem und die weitere Bewegungseinheit in einer noch weiteren Interaktionsposition interagieren können, ist, im Gegensatz zum Stand der Technik ein Transfer von Werkzeugaggregaten zwischen dem Lagerungssystem und mindestens zwei Bewegungseinheiten möglich.

Alle bezüglich der Werkstückbearbeitungsanlage und des Verfahrens offenbarten Merkmale, Merkmalskombinationen sowie deren Vorteile sind jeweils einzeln oder in beliebigen Kombinationen für verschiedene Aspekte der Erfindung übertragbar und nutzbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Figuren dargestellt und werden in der nachfolgenden Beschreibung näher erläutert, wobei sich gleiche Bezugszeichen auf gleiche oder ähnliche oder funktional gleiche Vorrichtungsbestandteile oder Verfahrensschritte beziehen. Die dort gezeigten Merkmale sind, insbesondere in den schematisch gehaltenen Figuren, nicht notwendigerweise maßstäblich zu verstehen und sind derart dargestellt, dass die erfindungsgemäßen Besonderheiten deutlich sichtbar gemacht werden können.
- **Fig. 1:**: Eine Prinzipskizze eines ersten bevorzugten Ausführungsbeispiels einer Werkstückbearbeitungsanlage zum Prozessieren eines Werkstücks
- **Fig. 2:**: Eine Prinzipskizze eines zweiten bevorzugten Ausführungsbeispiels einer Werkstückbearbeitungsanlage zum Prozessieren des Werkstücks
- **Fig. 3:**: Eine Prinzipskizze einer Ausführungsform einer Aufnahmeeinheit einer Bewegungseinheit
- **Fig. 4:**: Eine Prinzipskizze einer Ausführungsform eines Lagerplatzes eines Lagerungssystems
- **Fig. 5:**: Eine Prinzipskizze einer Ausführungsform eines Werkzeugaggregats
- **Fig. 6:**: Eine Prinzipskizze einer Anordnung von zwei Werkzeugaggregaten in einem Lagerplatz des Lagerungssystems
- **Fig. 7:**: Eine Prinzipskizze einer Anordnung der Bewegungseinheit mit Werkzeugaggregat zur Bearbeitung des Werkstücks
- **Fig. 8:**: Eine Prinzipskizze einer Ausführungsform einer Antriebseinheit der Bewegungseinheit bzw. des Lagerungssystems
- **Fig. 9:**: Eine Prinzipskizze eines dritten bevorzugten Ausführungsbeispiels einer Werkstückbearbeitungsanlage zum Prozessieren eines Werkstücks
- **Fig. 10:**: Eine Prinzipskizze eines vierten bevorzugten Ausführungsbeispiels einer Werkstückbearbeitungsanlage zum Prozessieren eines Werkstücks
- **Fig. 11:**: Ein schematisches Ablaufdiagramm einer ersten Ausführungsform eines Verfahrens zum Prozessieren des Werkstücks
- **Fig. 12:**: Ein schematisches Ablaufdiagramm einer zweiten Ausführungsform eines Verfahrens zum Prozessieren des Werkstücks

In einem ersten bevorzugten Ausführungsbeispiel umfasst eine Werkstückbearbeitungsanlage 10 im Wesentlichen ein Lagerungssystem 20 und eine Bewegungseinheit 40, die entlang der Längsrichtung 210 der Werkstückbearbeitungsanlage 10 bewegbar sind. Die Werkstückbearbeitungsanlage 10 erstreckt sich in einer horizontalen Ebene in einer Längsrichtung 210 und einer dazu senkrechten Querrichtung 220.

Die Bewegungseinheit 40 ist als in der Längsrichtung 210 verfahrbares Bearbeitungsportal 40a ausgebildet und umfasst eine in der Querrichtung 220 verfahrbare Aufnahmeeinheit 70 für mindestens ein Werkzeugaggregat 60, wobei das Werkzeugaggregat 60 in einer vertikalen Richtung 230 einem Werkstück 110 zustellbar ist. Ferner umfasst die Werkstückbearbeitungsanlage 10 zwei weitere Werkzeugaggregat 60'. 60" zur Bearbeitung des Werkstücks 110, welche in Lagerplätzen 25, 25' im Lagerungssystem 20 gelagert sind. Jeder der Lagerplätze 25, 25', 25" des Lagerungssystems 20 umfasst eine Aufnahmevorrichtung 26, 26', 26" für die Werkzeugaggregate 60', 60".

Weiterhin umfasst die Werkstückbearbeitungsanlage 10 ein Anlagensteuerungssystem 100 zur koordinierten Steuerung der Bewegungseinheit 40 und des Lagerungssystems 20, wobei die Bewegungseinheit 40 und das Lagerungssystem 20 in eine Interaktionsposition 200 bewegbar sind.

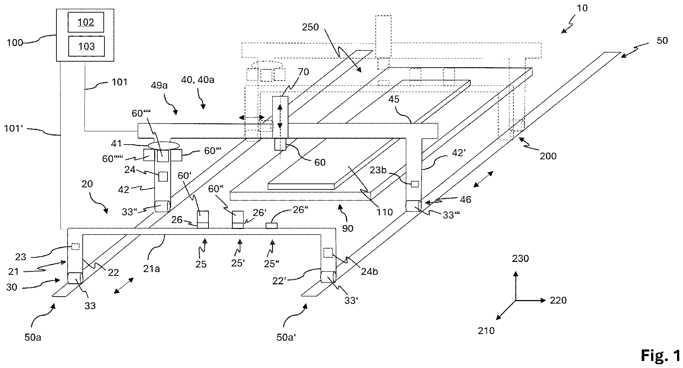

Des Weiteren umfasst die Werkstückbearbeitungsanlage 10 eine Bewegungsstruktur 50, auf der die Bewegungseinheit 40 und das Lagerungssystem 20 beweglich gelagert sind, und bevorzugt eine Werkstückauflage 90 zur bevorzugt fixierten Lagerung des Werkstücks 110. In einer einfachsten in Fig. 1 nicht dargestellten Ausführungsform wird die Bewegungsstruktur 50 durch den Boden einer Halle gebildet, in der die Werkstückbearbeitungsanlage 10 aufgestellt ist. In der in Fig. 1 dargestellten Ausführungsform erstreckt sich die Bewegungsstruktur 50 entlang der Längsrichtung 210 der Werkstückbearbeitungsanlage 10. Die Bewegungsstruktur 50 umfasst bevorzugt zwei parallele Fahrschienen 50a, 50a'. Die zwei parallelen Fahrschienen 50a, 50a' sind auf einer Grundfläche, insbesondere einer Standfläche der Werkstückbearbeitungsanlage 10 angeordnet. Die zwei parallelen Fahrschienen 50a, 50a' weisen bevorzugt einen Abstand im Bereich von 3000 mm, bis 6000 mm, zueinander auf. Jeder der zwei parallelen Fahrschienen 50a, 50a' besteht bevorzugt aus mehreren hintereinander angeordneten Teilmodulen, die verbindbar ausgestaltet sind. Die Teilmodule der zwei parallelen Fahrschienen 50a, 50a' haben bevorzugt eine Länge von 2 Metern, weiter bevorzugt eine Länge von 5 Metern, weiter bevorzugt eine Länge von 10 Metern, so dass die Teilmodule mittels eines Lastwagens transportierbar sind. Jedes Teilmodul der zwei parallelen Fahrschienen 50a, 50a' umfasst eine Grundplatte und eine Führungsplatte, bevorzugt zwei Führungsplatten. Die Grundplatte ist bevorzugt aus einem metallischen Werkstoff ausgebildet, weist ein flaches rechteckiges Profil im Querschnitt auf und weist eine Länge entsprechend der Länge des Teilmoduls auf. Die Grundplatte ist auf der Grundfläche der Werkstückbearbeitungsanlage 10 bevorzugt lösbar befestigt. Auf der Grundplatte sind die Führungsplatten parallel nebeneinander angeordnet. Die Führungsplatten sind bevorzugt ebenfalls aus einem metallischen Werkstoff ausgebildet, weisen ein flaches rechteckiges Profil im Querschnitt auf und erstrecken sich über die Gesamtlänge der Grundplatte. Insbesondere sind die Führungsplatten bevorzugt stoffschlüssig mit der Grundplatte verbunden. Die Führungsplatten bilden eine Führung für Bewegungselemente 33, 33' des Lagerungssystems 20 und weitere Bewegungselemente 33", 33‴ der Bewegungseinheit 40.

Das Anlagensteuerungssystem 100 umfasst eine CPU 102, eine Speichereinheit 103 mit einem Steuerprogramm und Steuerleitungen 101, 101'. Die Steuerleitungen 101, 101' verbinden die Anlagenkomponenten der Werkstückbearbeitungsanlage 10 miteinander, um Informationen zwischen den Anlagenkomponenten der Werkstückbearbeitungsanlage 10 und dem Anlagensteuerungssystem 100 auszutauschen. Sensoren, bevorzugt Positionssensoren und Zustandssensoren, der Werkstückbearbeitungsanlage 10 übermitteln bevorzugt Positionen und Zustände an die CPU 102. Ein erste Steuerleitung 101 verbindet die Bewegungseinheit 40 mit dem Anlagensteuerungssystem 100 und eine zweite Steuerleitung 101' verbindet das Lagerungssystem 20 mit dem Anlagensteuerungssystem 100.

Bevorzugt an jedem Lagerplatz 25, 25', 25" des Lagerungssystems 20 ist je ein Sensor, bevorzugt ein induktiver Sensor, angebracht, welcher eingerichtet ist, die Anwesenheit oder Abwesenheit eines Objekts, bevorzugt metallischen Objekts, zu erkennen. Insbesondere erkennen die induktiven Sensoren die Anwesenheit oder Abwesenheit eines Werkzeugaggregats 60', 60" und kommunizieren diese Information an die CPU 102 des Anlagensteuerungssystems 100. An den verschiedenen Antriebseinheiten der Komponenten der Werkstückbearbeitungsanlage 10 sind Positionssensoren, insbesondere Winkelsensoren und/oder lineare Positionssensoren, angebracht, die die jeweilige IstPosition an die CPU 102 übermitteln. Das Steuerprogramm liefert der CPU 102 bevorzugt SollPositionen der Komponenten der Werkstückbearbeitungsanlage 10. Des Weiteren beinhaltet das Steuerprogramm eine Abfolge von Operationen zur Prozessierung des Werkstücks 110. Die CPU 102 steuert auf Basis dieser Informationen die Komponenten der Werkstückbearbeitungsanlage 10 und koordiniert deren Bewegungen.

Das Anlagensteuerungssystem 100 steuert bevorzugt die Bewegungseinheit 40 und das Lagerungssystem 20, sodass die Aufnahmeeinheit 70 und das Werkzeugaggregat 60 insbesondere in der Interaktionsposition 200 koppelbar oder entkoppelbar sind. Die Interaktionsposition 200 wird dabei von dem Anlagensteuerungssystem 100 zum Beispiel in Abhängigkeit von jenem Aufenthaltsort der Bewegungseinheit 40 gewählt, an dem die Bewegungseinheit 40 zuvor eine Bearbeitung an dem Werkstück mittels des Werkzeugaggregats 60 durchgeführt hat. Insbesondere steuert das Anlagensteuerungssystem 100 die Bewegungseinheit 40 und das Lagerungssystem 20 derart, um ein automatisiertes Aufnehmen oder Ablegen eines Werkzeugaggregats 60, 60', 60" aus dem Lagerungssystem 20 bzw. in das Lagerungssystem 20 zu gewährleisten.

Die Werkstückauflage 90 ist derart gestaltet, um ein Werkstück 110, insbesondere ein Holzrahmenelement wie beispielsweise ein Holzrahmenwandelement für ein Fertighaus, flach zu lagern. Das Werkstück 110 ist auf der Werkstückauflage 90 bevorzugt über ein bekanntes Spannsystem fixiert, um eine sichere und präzise Prozessierung zu ermöglichen. Die Werkstückauflage 90 lagert das Werkstück 110 derart, dass eine Oberseite des Werkstücks 110 in der vertikalen Richtung 230 nach oben zeigt. Bevorzugt wird die Oberseite des Werkstücks 110 durch das Werkzeugaggregat 60 prozessiert. Es ist aber auch möglich Längsseiten und Querseitendes Werkstücks 110 zu prozessieren, um z.B. Bohrungen an diesen Flächen vorzunehmen.

Das Lagerungssystem 20 umfasst im Wesentlichen eine Antriebseinheit 30, eine Grundstruktur 21 in Form zweier Stützen 22, 22' eine Lagerungsstruktur 21a in Form eines Trägerbalkens, drei Lagerplätze 25, 25', 25", und mindestens ein Sensorelement 23.

Die zwei Stützen 22, 22' des Lagerungssystems 20 erstrecken sich in vertikaler Richtung 230. Auf den zwei Stützen 22, 22' ist die Lagerungsstruktur 21a angeordnet bzw. liegt die Lagerungsstruktur 21a bevorzugt auf. Bevorzugt ist die Lagerungsstruktur 21a mit den beiden Stützen 22, 22' formschlüssig verbunden. Der Trägerbalken 21a erstreckt sich in der Querrichtung 220 der Werkstückbearbeitungsanlage 10, wobei jeweils eine Stütze 22, 22' auf jeweils einer Fahrschiene der zwei parallelen Fahrschienen 50a, 50a' der Bewegungsstruktur 50 beweglich gelagert ist. Der Trägerbalken 21a des Lagerungssystems 20 überspannt einen Bereich, in dem ein Werkstück 110 in Querrichtung der Werkstückbearbeitungsanlage 10 zur Prozessierung gelagert ist. Die Form des Trägerbalkens 21a und der beiden Stützen 21, 21' entspricht der eines Portals. Das Lagerungssystem 20 ist somit derart ausgebildet, dass das Lagerungssystem 20 über das Werkstück 110 bewegt werden kann (siehe Fig. 1).

Auf dem Trägerbalken 21a sind die Lagerplätze 25, 25', 25" angeordnet. Die Anzahl der Lagerplätze 25, 25', 25" auf dem Trägerbalken 21a ist variabel. Insbesondere sind drei Lagerplätze 25, 25', 25" auf dem Trägerbalken 21a angeordnet. Bevorzugt sind die Lagerplätze 25, 25', 25" über mechanische Schnittstellen auf dem Trägerbalken 21a verschraubbar. Es können bevorzugt bis zu 10 Lagerplätze 25, 25' 25" auf dem Trägerbalken 21a angeordnet sein, wobei der Trägerbalken 21a bevorzugt mehrere mechanische Schnittstellen mit dementsprechenden Gewinden aufweist. Die Position eines jeden Lagerplatzes 25, 25', 25" auf dem Trägerbalken 21a des Lagerungssystems 20 ist variabel gestaltet. Die Stützen 22, 22' sind derart gestaltet, um das Gewicht des Trägerbalkens 21a inklusive der Lagerplätze 25, 25', 25" und darauf gelagerter Werkzeugaggregate 60', 60" zu tragen und um ein Kippen des Lagerungssystems 20 zu verhindern. Insbesondere soll die Form der Stützen 22, 22' eine dynamische Stabilität des Lagerungssystems 20 während einer längs gerichteten Bewegung auf der Bewegungsstruktur 50 gewährleisten. Ferner sind die Stützen 22, 22' des Lagerungssystems 20 derart gestaltet, dass der Trägerbalken 21a in der vertikalen Richtung 230 über der Oberfläche des Werkstücks 110 angeordnet ist und somit in einer Höhe angeordnet, um das Lagerungssystem 20 über das auf der Werkstückauflage 90 befindlichen Werkstück 110 hinwegfahren zu können. Die Lagerplätze 25, 25' 25" des Lagerungssystems 20 sind bevorzugt gleichartig ausgebildet.

Im ersten bevorzugten Ausführungsbeispiel ist bevorzugt das Sensorelement 23 am Lagerungssystem 20 angeordnet und bevorzugt ein zweites Sensorelement 23a an der Bewegungseinheit 40 angeordnet. Das Sensorelement 23 ist bevorzugt an einer Stütze 22, 22' des Lagerungssystems 20 angeordnet. Das zweite Sensorelement 23a ist bevorzugt an einem Ständer 42, 42' der Bewegungseinheit 40 angeordnet. Die Sensorelemente 23, 23a sind insbesondere Abstandssensoren und/oder Distanzsensoren, um einen absoluten Abstand des Lagerungssystems 20 bzw. der Bewegungseinheit 40 zu einem Referenzpunkt oder zu einem Referenzsystem z.B. in Form eines entlang der Bewegungsstruktur 50 angeordneten Längenmaßsystems zu messen.

In einer alternativen in Fig. 1 dargestellten Ausführungsform ist das Sensorelement 23 am Lagerungssystem 20 derart der Bewegungseinheit 40 zugewandt angeordnet, um eine Messfläche 24, welche an der Bewegungseinheit 40 ausgebildet ist, zu erfassen bzw. elektromagnetische oder akustische Wellen dorthin zu senden und das zweite Sensorelement 23a an der Bewegungseinheit 40 ist derart dem Lagerungssystem 20 zugewandt angeordnet, um eine zweite Messfläche 24a, welche am Lagerungssystem 20 ausgebildet ist, zu erfassen bzw. weitere elektromagnetische oder akustische Wellen dorthin zu senden. Die zweite Messfläche 24a am Lagerungssystem 20 und die erste Messfläche 24 an der Bewegungseinheit 40 sind bevorzugt ebene oder konkave Flächen, welche in Relation zu den jeweiligen Sensorelementen 23, 23a ausgebildet sind, um eine genaue Messung durch die jeweiligen Sensorelemente 23, 23a zu gewährleisten. Durch die beiden Sensorelemente 23, 23a und die beiden Messflächen 24, 24a ist es möglich, den Abstand, insbesondere die relative Position, zwischen der Bewegungseinheit 40 und dem Lagerungssystem 20 redundant zu erfassen, selbst wenn eines der Sensorelemente 23, 23a ausfällt.

Das Bearbeitungsportal 40a umfasst im ersten bevorzugten Ausführungsbeispiel im Wesentlichen eine portalförmige Grundstruktur 49a, eine Antriebseinheit 46 zur Bewegung der Bewegungseinheit 40 entlang der Längsrichtung 210 der Werkstückbearbeitungsanlage 10, die Aufnahmeeinheit 70 zur Aufnahme des Werkzeugaggregats 60 aus dem Lagerungssystem 20 und bevorzugt eine Werkzeugwechselstation 41 (siehe Fig. 1). Die Aufnahmeeinheit kann in dem bevorzugten Ausführungsbeispiel in der Längsrichtung etwas nach vorne ausragen, um das Werkzeugaggregat aus dem Lagerungssystem aufnehmen zu können.

Die portalförmige Grundstruktur 49a umfasst einen Querträger 45 und zwei Ständern 42, 42', wobei der Querträger 45 an den zwei Ständern 42, 42' angeordnet ist und bevorzugt auf den zwei Ständern 42, 42' aufliegt. Bevorzugt ist der Querträger 45 mit den beiden Ständern 42, 42' formschlüssig verbunden, insbesondere verschraubt. Der Querträger 45 erstreckt sich in der Querrichtung 220 der Werkstückbearbeitungsanlage 10. Der Querträger 45 des Bearbeitungsportals 40a überspannt einen Bereich, in dem ein Werkstück 110 in Querrichtung der Werkstückbearbeitungsanlage 10 zur Prozessierung gelagert ist. Im ersten bevorzugten Ausführungsbeispiel ist die Erstreckungsrichtung des Querträgers 45 des Bearbeitungsportals 40a parallel zur Erstreckungsrichtung des Trägerbalkens 21a des Lagerungssystems 20. Die Ständer 42, 42' erstrecken sich in der vertikalen Richtung 230 der Werkstückbearbeitungsanlage 10 und sind derart gestaltet, dass der Querträger 45 in der vertikalen Richtung 230 über dem Werkstück 110 angeordnet ist.

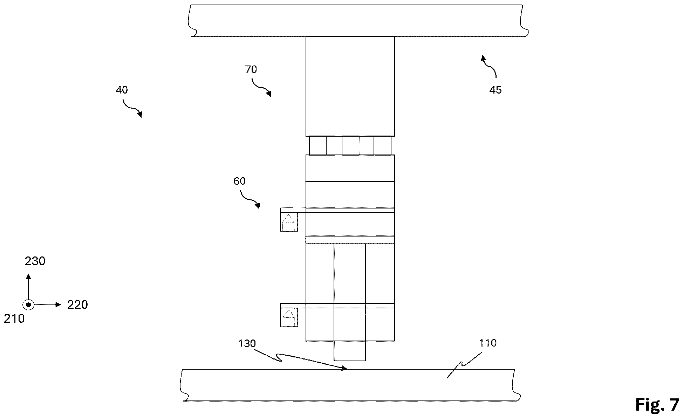

Bevorzugt befinden sich der Querträger 45 der portalförmigen Grundstruktur 49a in einer Höhe, sodass das Bearbeitungsportal 40a über das Werkstück 110 hinwegfahren kann und, dass das Werkzeugaggregat 60, welches an der Aufnahmeeinheit 70 angeordnet ist, das Werkstück 110 prozessieren kann. (siehe auch Fig. 7)

Die Werkzeugwechselstation 41 ist an der Bewegungseinheit 40 angeordnet und ist mit der Bewegungseinheit 40 in der Längsrichtung 210 bewegbar. In der Werkzeugwechselstation 41 sind ebenfalls Werkzeugaggregate 60‴, 60ʺʺ, 60ʺ‴ zur Prozessierung des Werkstücks 110 lagerbar. Wie das Lagerungssystem 20 umfasst die Werkzeugwechselstation 41 Lagerplätze in denen die Werkzeugaggregate 60"', 60ʺʺ, 60ʺ‴ lagerbar sind. Die Werkzeugwechselstation 41 ist derart an der Bewegungseinheit 40 angeordnet, sodass die Aufnahmeeinheit 70 die Werkzeugaggregate 60"', 60"", 60ʺ‴ automatisiert aufnehmen und ablegen kann. Da die Werkzeugwechselstation 41 an der Bewegungseinheit angeordnet und mit dieser bewegbar ist, eignet sich die Werkzeugwechselstation 41 wegen des begrenzten Platzangebots besonders gut, um Werkzeugaggregate 60‴, 60"", 60‴ʺ mit kleinen Werkzeugen zu lagern oder um Werkzeugaggregate 60"', 60ʺʺ, 60‴ʺ zu lagern, die besonders häufig benötigt werden. Weniger häufig benötigte Werkzeugaggregate 60', 60" sind in diesem Fall bevorzugt in das Lagerungssystem 20 ausgelagert.

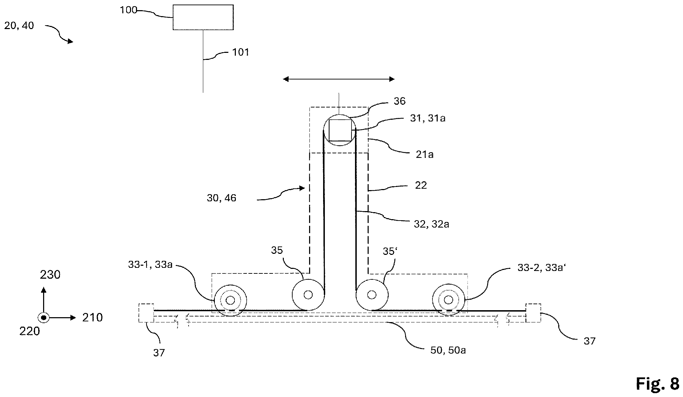

Die Antriebseinheit 46 der Bewegungseinheit 40 ermöglicht es, die Bewegungseinheit 40 entlang der der Längsrichtung 210 zu bewegen. Die Funktionsweise und der Aufbau der Antriebseinheit 46 der Bewegungseinheit 40 entspricht bevorzugt im Wesentlichen der Funktionsweise und dem Aufbau der Antriebseinheit des Lagerungssystems 30 wie dies nachfolgend in Bezug auf Fig. 8 noch näher erläutert wird.

Dadurch, dass sich die Bewegungseinheit 40 und das Lagerungssystem 20 im ersten bevorzugten Ausführungsbeispiel auf derselben Bewegungsstruktur 50 bewegen, können sowohl die Antriebseinheit 46 der Bewegungseinheit 40 als auch die Antriebseinheit 30 des Lagerungssystems 30 gleichartige Kraftübertragungsmittel benutzen, um eine Fortbewegung entlang der Bewegungsstruktur 50 zu gewährleisten (siehe näheres in der nachfolgenden Beschreibung zur Fig. 8).

Die Aufnahmeeinheit 70 ist bevorzugt entlang des Querträgers 45 des Bearbeitungsportals 40a in der Querrichtung 220 der Werkstückbearbeitungsanlage 10 bewegbar (siehe Fig. 1). Die Aufnahmeeinheit 70 ist bevorzugt in einer Querrichtung 220 der Werkstückbearbeitungsanlage 10 und in einer vertikalen Richtung 230 der Werkstückbearbeitungsanlage 10 beweglich gelagert. Die Aufnahmeeinheit 70 ist derart gestaltet, um das Werkzeugaggregat 60 aus dem Lagerungssystem 20 aufzunehmen oder abzulegen.

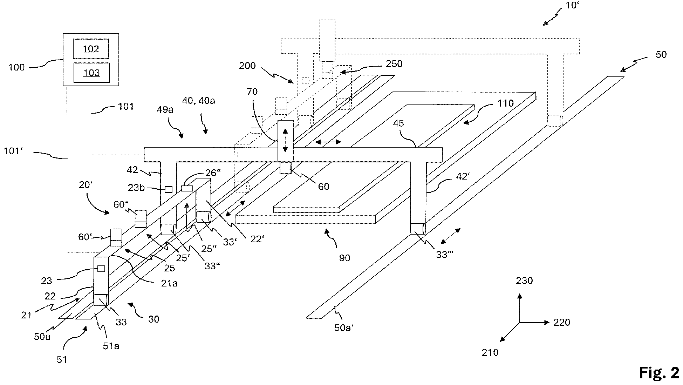

In einem zweiten bevorzugten Ausführungsbeispiel einer Werkstückbearbeitungsanlage 10' gemäß Fig. 2, umfasst die Werkstückbearbeitungsanlage 10' ein Lagerungssystem 20', das quasi im Vergleich zum Lagerungssystem 20 der Werkstückbearbeitungsanlage 10 nach Fig. 1 um 90° um die vertikale Richtung 230 gedreht ist. Das Lagerungssystem 20' umfasst wie das Lagerungssystem 20 den Trägerbalken 21a als Lagerungsstruktur und die beiden Ständer 22, 22' als Grundstruktur 21. Der Trägerbalken 21a erstreckt sich im Gegensatz zum Lagerungssystem 20 entlang der Längsrichtung 210 der Werkstückbearbeitungsanlage 10.

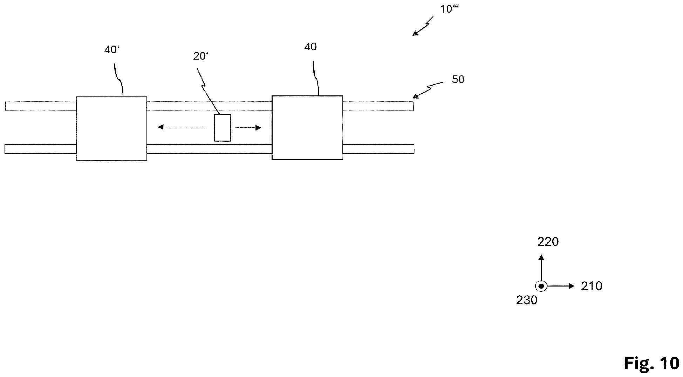

Die Werkstückbearbeitungsanlage 10' umfasst bevorzugt neben einer Bewegungsstruktur 50 für eine Bewegungseinheit 40 eine zweite Bewegungsstruktur 51, auf der das Lagerungssystem 20'insbesondere auf einer Fahrschiene 51a beweglich gelagert ist. Die beiden Stützen 22, 22' des Lagerungssystems 20' sind auf der Fahrschiene 51a beweglich gelagert. Das Lagerungssystem 20' ist derart ausgebildet, dass das Lagerungssystem 20' in der Längsrichtung 210 der Werkstückbearbeitungsanlage 10' sowohl das Werkstück 110 als auch die Bewegungseinheit 40 seitlich passieren kann. Das Lagerungssystem 20' ist bevorzugt derart ausgebildet, dass das Lagerungssystem 20' mit den eingelagerten Werkzeugaggregaten 60', 60" eine geringere Höhe aufweist, als eine portalförmige Grundstruktur 49a der Bewegungseinheit 40. Folglich ist das Lagerungssystem 20' unter der portalförmige Grundstruktur 49a der Bewegungseinheit 40 hindurchbewegbar. Das Lagerungssystem 20' ist insbesondere von einem Ende der Werkstückbearbeitungsanlage 10' zum anderen Ende der Werkstückbearbeitungsanlage 10' in der Längsrichtung 210 bewegbar. Das Lagerungssystem 20' kann folglich auch mit einer weiteren Bewegungseinheit 40' (siehe auch Fig. 10) oder mit mehr als zwei Bewegungseinheiten interagieren, die entweder der Werkstückbearbeitungsanlage 10 oder einer weiteren in Fig. 2 nicht dargestellten Werkstückbearbeitungsanlage zugeordnet sind.

In Fig. 2 sind durch gestrichelte Linien bei einer Interaktionsposition 200 die Bewegungseinheit 40 und die Lagerungsstation 20' in einer Koppelstellung 250 dargestellt, bei der mindestens ein Werkzeugaggregat zwischen dem Lagerungssystem 20' und der Bewegungseinheit 40 ausgetauscht werden kann.

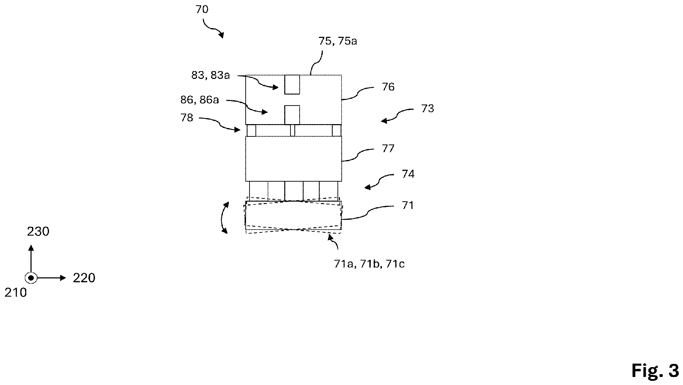

Gemäß der Fig. 3 umfasst die Aufnahmeeinheit 70 bevorzugt einen vertikalen Antrieb 86 und einen horizontalen Antrieb 83. Mit dem horizontalen Antrieb 83 ist die Aufnahmeeinheit 70 bevorzugt entlang des Querträgers 45 in der Querrichtung 220 bewegbar. Mit dem vertikalen Antrieb 86 ist die Aufnahmeeinheit 70 entlang der vertikalen Richtung 230 der Werkstückbearbeitungsanlage 10 bewegbar.

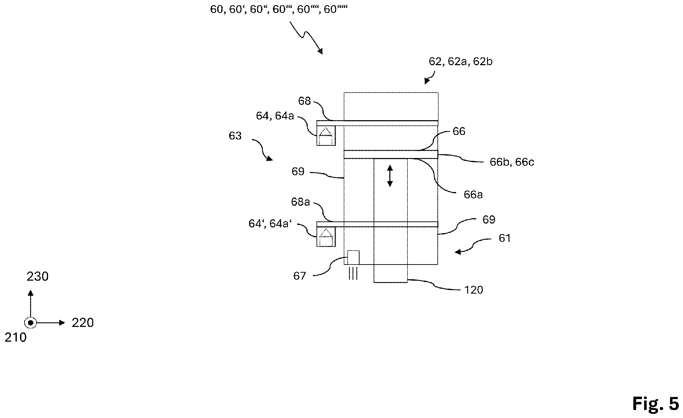

Die Aufnahmeeinheit 70 umfasst ferner bevorzugt ein Grundgerüst 73, ein Kupplungselement 71 zur Kopplung oder Entkopplung mit einem Kupplungselement 62 des Werkzeugaggregats 60 (siehe Fig. 5), und eine Einstelleinheit 74 zur Einstellung und Ausrichtung im Raum einer Kupplungskontaktfläche 71b des Kupplungselements 71.

Bevorzugt besteht das Grundgerüst 73 der Aufnahmeeinheit 70 aus zwei Teilen, wobei ein erster Teil des Grundgerüsts 76 über eine Schnittstelle 75 mit dem Querträger 45 der portalförmigen Grundstruktur 49a verbunden ist. Die Schnittstelle 75 umfasst insbesondere zwei Führungswagen 75a, welche auf Führungsschienen beweglich gelagert sind. Die Führungsschienen sind am Querträger 45 des Bearbeitungsportals 40a angeordnet. Ein zweiter Teil des Grundgerüsts 77 ist in der vertikalen Richtung 230 verschiebbar am ersten Teil des Grundgerüsts 76 gelagert. Der zweite Teil des Grundgerüsts 77 ist bevorzugt über eine lineare Führung 78 am ersten Teil des Grundgerüsts 76 beweglich gelagert.

Der horizontale Antrieb 83 umfasst bevorzugt einen elektrischen Servomotor 83a mit einem Ritzel, wobei der horizontale Antrieb 83 am ersten Teil des Grundgerüsts 76 angeordnet ist. Der elektrische Servomotor 83a treibt das Ritzel an und das Ritzel greift in eine erste Zahnstange ein, welche am Querträger 45 des Bearbeitungsportals 40a angeordnet ist. Hierdurch ist eine Bewegung der Aufnahmeeinheit 70 entlang der Querrichtung 220 der Werkstückbearbeitungsanlage möglich, um eine positionsgenaue Prozessierung des Werkstücks 110 und um eine positionsgenaue Aufnahme und Ablage des Werkzeugaggregats 60 zu gewährleisten. Andere Antriebslösungen, bevorzugt hydraulische oder pneumatische Antriebe, zur linearen Bewegung der Aufnahmeeinheit 70 entlang der Querrichtung 220 der Werkstückbearbeitungsanlage 10, 10' sind ebenfalls möglich.

Der vertikale Antrieb 86 umfasst bevorzugt einen pneumatischen Linearantrieb 86a, welcher aus einem Kolben und einem Zylindergehäuse besteht. Der Kolben ist in dem Zylindergehäuse beweglich gelagert. Das Zylindergehäuse ist mit dem ersten Teil des Grundgerüsts 76 verbunden. Der Kolben des pneumatischen Linearantriebs 86a ist mit dem zweiten Teil des Grundgerüsts 77 verbunden und verschiebt diesen entlang der linearen Führung 78 in der vertikalen Richtung 230. Der vertikale Antrieb 86 verschiebt den zweiten Teil des Grundgerüsts in der vertikalen Richtung 230, um so zu ermöglichen, dass das Werkstück 110 oder das Lagerungssystem 20, 20' mit dem Werkzeugaggregat 60 erreichbar ist. Andere Antriebslösungen, bevorzugt hydraulische oder elektrische Antriebe, zur linearen Bewegung der Aufnahmeeinheit 70 entlang der vertikalen Richtung 230 der Werkstückbearbeitungsanlage 10, sind ebenfalls möglich.

Das Kupplungselement 71 der Aufnahmeeinheit 70 ist über die Einstelleinheit 74 einstellbar mit dem Grundgerüst 73 der Aufnahmeeinheit 70 verbunden. Das Kupplungselement 71 umfasst die Kupplungskontaktfläche 71b, welche bei einer Kopplung mit dem zweiten Kupplungselement 62 des Werkzeugaggregats 60 in Kontakt tritt. Das Kupplungselement 71 ist derart gestaltet ist, um ein formschlüssige Verbindung mit dem zweiten Kupplungselement 62 einzugehen. Über einen Impuls, insbesondere einen pneumatischen Impuls, ist ein Koppelmechanismus 71c, welcher sich im Kupplungselement 71 befindet, lösbar. Der Koppelmechanismus 71c im Kupplungselement 71 ist derart konfiguriert, um eine sichere Kopplung mit dem zweiten Kupplungselement 62 zu gewährleisten. Insbesondere ist eine Koppelkraft des Koppelmechanismus 71c derart auszulegen, dass diese eine sichere Prozessierung eines Werkstücks 110 mit dem Werkzeugaggregat 60 ermöglicht.

Das Kupplungselement 71 umfasst des Weiteren Einführelemente 71a. Die Einführelemente 71a haben bevorzugt eine konische Form. Die Einführelemente 71a dienen bevorzugt dazu, während eines Kopplungsvorgangs kleinere positionsabhängige Ungenauigkeiten der Aufnahmeeinheit 70 und des Lagerungssystems 20 zu kompensieren. Die positionsabhängigen Ungenauigkeiten können im Bereich von +- 5mm liegen. Das Kupplungselement 71 umfasst ferner Schnittstellen zur Übertragung von bevorzugt elektrischer und pneumatischer Energie und zur Übertragung von Steuersignalen. Die pneumatische und elektrische Energie und die Steuersignale können in einem gekoppelten Zustand übertragen werden. Die pneumatische und elektrische Energie kann hierdurch von der Bewegungseinheit 40 an das Werkzeugaggregat 60 übertragen werden.

Die Einstelleinheit 74 dient bevorzugt dem Zweck, um die Kopplung oder Entkopplung des Kupplungselements 71 und des Kupplungselements 62 in der Koppelstellung 250 zu ermöglichen. Die Einstelleinheit 74 umfasst Einstellelemente, mit denen das Kupplungselement 71 einstellbar ist. Insbesondere ist mit den Einstellelementen die Kupplungskontaktfläche 71b des Kupplungselements 71 einstellbar. Die Kupplungskontaktfläche 71b soll durch die Einstelleinheit 74 bevorzugt parallel zur Standfläche der Werkstückbearbeitungsanlage 10, 10' ausgerichtet werden.

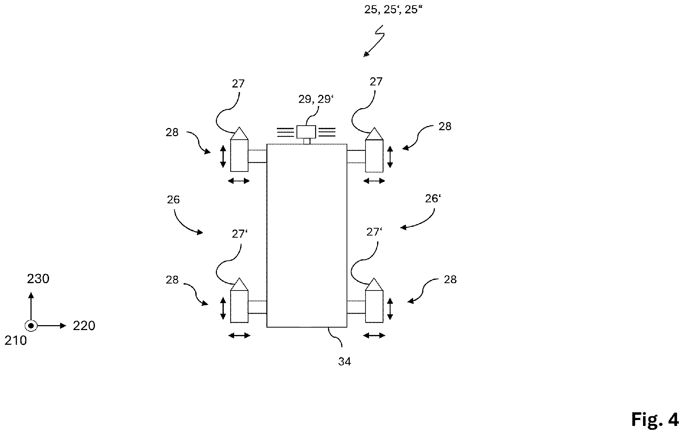

Fig. 4 zeigt eine Prinzipskizze eines Ausführungsbeispiels des Lagerplatzes 25, 25', 25" für Werkzeugaggregate 60. Der Lagerplatz 25, 25', 25" umfasst bevorzugt zwei Aufnahmevorrichtungen 26, 26', eine Grundstruktur 34 und zwei Sensoren 29, 29' bevorzugt zwei induktive Sensoren. Beide Aufnahmevorrichtungen 26, 26' sind derart ausgebildet, um ein Lagern eines Werkzeugaggregats 60 zu ermöglichen. Beide Aufnahmevorrichtungen 26, 26' sind bevorzugt gleichartig ausgebildet. Insbesondere kann das Werkzeugaggregat 60 in die Aufnahmevorrichtungen 26, 26' formschlüssig eingelagert werden. Das jeweilige Werkzeugaggregat 60 ist derart in den Aufnahmevorrichtungen 26, 26' gelagert, dass das jeweilige Werkzeugaggregat 60 von der Aufnahmeeinheit 70 der Bewegungseinheit 40 aufnehmbar oder ablegbar ist.

Die Grundstruktur 34 ist mit einer der mechanischen Schnittstellen des Trägerbalkens 21a des Lagerungssystems 20, 20' verbunden. Die beiden Aufnahmevorrichtungen 26, 26' sind an der Grundstruktur 34 angeordnet. Bevorzugt sind die beiden Aufnahmevorrichtungen 26, 26' seitlich, jeweils gegenüberliegend, an der Grundstruktur 34 angeordnet. Jeder der beiden Aufnahmevorrichtung 26, 26' umfasst bevorzugt zwei Aufnahmepunkte 27, 27'. Die zwei Aufnahmepunkte 27, 27' sind in der vertikalen Richtung 230 bevorzugt übereinander angeordnet. Die Aufnahmepunkte 27, 27' werden jeweils bevorzugt mit einer Ausrichteinheit 28 an der Grundstruktur 34 befestigt. Die Ausrichteinheit 28 umfasst insbesondere einstellbare Distanzelemente. Die einstellbaren Distanzelemente sind bevorzugt in der Querrichtung 220 und der vertikalen Richtung 230 einstellbar, um den Abstand der Aufnahmepunkte 27, 27' zur Grundstruktur 34 einzustellen. Die Ausrichteinheit 28 dient bevorzugt dem Zweck, das zweite Kupplungselement 62 eines eingelagerten Werkzeugaggregats 60 am Lagerplatz 25, 25', 25" auszurichten. Die Querrichtung 220 entspricht in dem ersten bevorzugten Ausführungsbeispiel der Werkstückbearbeitungsanlage 10 einer Erstreckungsrichtung des Trägerbalkens 21a des Lagerungssystems 20.

Bevorzugt haben die Aufnahmepunkte 27, 27' eine kugelige Form oder kegelige Form, wobei die kugelige Form oder die kegelige Form die Aufnahme des Werkzeugaggregats 60 erleichtert. Insbesondere ist das jeweilige Werkzeugaggregat 60 durch die kugelige oder kegelige Form der Aufnahmepunkte 27, 27' formschlüssig aufnehmbar, sodass eine sichere Lagerung im Lagerplatz 25, 25', 25" gewährleistet ist. Bevorzugt am oberen Ende der Grundstruktur 34 des Lagerplatzes 25, 25', 25" sind die zwei Sensoren 29, 29' angeordnet. Diese Sensoren 29, 29' befinden sich bevorzugt mittig zwischen den beiden seitlich an der Grundstruktur 34 angeordneten Aufnahmevorrichtungen 26, 26'. Die Sensoren 29, 29' sind auf den jeweils oberen Aufnahmepunkt der Aufnahmevorrichtung 26, 26' ausgerichtet. Der Sensor 29, 29' ist derart ausgebildet, um die Annäherung eines metallischen Gegenstandes zu erfassen. Insbesondere erzeugt der Sensor 29, 29' ein elektrisches Wechselfeld, mit dem dieser einen metallischen Gegenstand erfasst. Der jeweilige Sensor 29, 29' erfasst bevorzugt die Anwesenheit oder Abwesenheit eines der beiden Werkzeugaggregate 60 im Lagerplatz 25, 25', 25", um das jeweilige Ergebnis als Information an das Anlagensteuerungssystem 100 weiterzuleiten.

Fig. 5 zeigt eine Prinzipskizze eines Ausführungsbeispiels des Werkzeugaggregats 60, 60', 60", 60‴, 60"', 60ʺ‴ (im Folgenden wird zur Vereinfachung nur noch das Werkzeugaggregat mit dem Bezugszeichen 60 genannt). Mit dem Werkzeugaggregat 60 ist das Werkstück 110 prozessierbar. Das Werkzeugaggregat 60 besteht im Wesentlichen aus einer Grundstruktur 61, einer Werkzeugaufnahme 66 für ein Werkzeug 120, dem Kupplungselement 62, einer Stützvorrichtung 63 und einer Sensorik 67.

Mittels der in Fig. 5 dargestellten Stützvorrichtung 63 wird das Werkzeugaggregat 60 positionsgetreu in dem Lagerungssystem 20, 20' gelagert. Die Stützvorrichtung 63 besteht aus Stützpunkten 64, 64' insbesondere aus zwei Stützpunkten 64, 64' wobei ein erster Stützpunkt 64 an einer horizontalen ersten Platte 68 angeordnet ist, und wobei eine zweiter Stützpunkt 64' an einer horizontalen zweiten Platte 68a angeordnet ist. Die Stützpunkte 64, 64' sind derart gestaltet, um eine formschlüssige und lösbare Verbindung zwischen dem Werkzeugaggregat 60 und dem Lagerplatz 25, 25', 25" zu ermöglichen. Die zwei Stützpunkte 64, 64' sind insbesondere nach unten geöffnete Hülsenelemente 64a, 64a' wobei die Hülsenelemente 64a, 64a' jeweils einen Aufnahmepunkt 27, 27' bevorzugt ein kugelförmiges oder ein kegelförmiges Element, formschlüssig aufnehmen können, wobei die Hülsenelemente 64a, 64a' bevorzugt an einer Unterseite der ersten Platte 68 und der zweiten Platte 68a angeordnet sind. Ferner haben die Hülsenelemente 64a, 64a' der Stützvorrichtung 63 einen definierten Abstand in der vertikalen Richtung 230 zueinander. Der Abstand der Hülsenelemente 64a, 64a' entspricht dem Abstand von Aufnahmepunkten 27, 27' der jeweiligen Aufnahmevorrichtung 26, 26' des Lagerplatzes 25, 25', 25".

Die Werkzeugaufnahme 66 ist in der vertikalen Richtung 230 beweglich an der Grundstruktur 61 des Werkzeugaggregats 60 gelagert, wobei die Werkzeugaufnahme 66 an der Unterseite eine mechanische Schnittstelle für das Werkzeug 120 aufweist. Das Werkzeug 120 ist an der mechanischen Schnittstelle bevorzugt mit einem Befestigungsmittel auswechselbar befestigt. An der Werkzeugaufnahme 66 sind bevorzugt Lagerstellen 66b für Führungsstangen 69 angebracht. Über die Lagerstellen 66b lässt sich die Werkzeugaufnahme 66 entlang der Führungsstangen 69 in der vertikalen Richtung 230 verschieben. Über einen Klemmmechanismus 66c kann die Werkzeugaufnahme 66 in der vertikalen Richtung 230 fixiert werden, sodass die Werkzeugaufnahme 66 verklemmt wird und während einer Prozessierung gesichert ist. Zur Anpassung der Höhe der Werkzeugaufnahme 66 wird die Klemmung geöffnet und die Werkzeugaufnahme 66 wird dementsprechend in der vertikalen Richtung 230 verschoben. Durch die Anpassung der Höhe der Werkzeugaufnahme 66 kann die vertikale Position des Werkzeugs 120 im Werkzeugaggregat 60 angepasst werden. Unterschiedliche Werkzeuge 120 benötigen je nach Größe des jeweiligen Werkzeugs 120 unterschiedliche vertikale Positionen im Werkzeugaggregat 60. Die Werkzeugaufnahme 66 ist bevorzugt individuell auf das Werkzeug 120 zugeschnitten, wobei auch möglich ist, dass unterschiedliche Werkzeuge 120 in einer universellen Werkzeugaufnahme 66 aufgenommen werden.

Mit dem Werkzeug 120 wird das Werkstück 110 prozessiert. Das Werkzeug 120 ist über insbesondere elektrische Leitungen, pneumatische Leitungen und Steuerleitungen mit dem zweiten Kupplungselement 62 verbunden, sodass das Werkzeug 120 mit Energie versorgt werden kann und mit dem Anlagensteuerungssystem 100 kommunizieren kann. Das Werkzeug 120 ist bevorzugt eine Befestigungseinheit, eine Bearbeitungseinheit, eine Beschriftungseinheit, und/oder eine Prüfeinheit. Mit der Befestigungseinheit sind bevorzugt Befestigungsmittel in das Werkstück 110 eintreibbar, wobei insbesondere Klammern, Nägel und Schrauben in das Werkstück 110 eintreibbar sind. Ebenfalls möglich ist, dass mit der Befestigungseinheit ein Klebstoff auf das Werkstück 110 auftragbar ist. Mit der Beschriftungseinheit kann das Werkstück 110 beschriftet werden. Insbesondere handelt es sich bei der Beschriftungseinheit um einen Markierer oder um eine Einheit zum Zeichnen. Der Markierer kann das Werkstück 110 beispielsweise per Laserstrahl oder Tintenstrahldruck beschriften. Insbesondere ist eine Markierung in Form eines QR-Codes oder in Form eines Barcodes möglich. Mit der Einheit zum Zeichnen kann das Werkstück 110 mit einem Kugelschreiber angezeichnet werden, um beispielsweise die Position von Anbauteilen, welche an dem Werkstück 110 manuell anzubringen sind, zu verdeutlichen. Mit der Prüfeinheit kann der Zustand des Werkstücks 110 und/oder dessen Umgebung mittels eines bevorzugten optischen Sensors, und/oder eines Temperatursensors, und/oder eines Feuchtigkeitssensors und/oder eines Drucksensors vermessen werden. Mit der Bearbeitungseinheit kann das Werkstück 110 spanend bearbeitet werden. Die Bearbeitungseinheit umfasst bevorzugt eine Bearbeitungsspindel und ein Bearbeitungswerkzeug. Das Bearbeitungswerkzeug ist insbesondere ein Fräswerkzeug, ein Sägewerkzeug oder ein Bohrwerkzeug, wobei das Bearbeitungswerkzeug mit dem Werkstück 110 in Eingriff gebracht werden kann. Die Bearbeitungsspindel dreht das Bearbeitungswerkzeug mit einer vom Anlagensteuerungssystem 100 vorgegebenen Drehzahl, um Material spanend abzuheben, insbesondere, um zu bohren, zu fräsen oder zu sägen. Je nach Bearbeitungswerkzeug sind unterschiedliche Drehzahlen für die unterschiedlichen Bearbeitungsschritte notwendig.

Die in Fig. 5 dargestellte Grundstruktur 61 des Werkzeugaggregats 60 umfasst die erste Platte 68 und die zweite Platte 68a und die Führungsstangen 69. Die erste Platte 68, die bevorzugt horizontal ausgerichtet und ringförmig oder u-förmig ausgebildet ist, bildet einen oberen Teil der Grundstruktur 61. Die zweite Platte 68a, die ebenfalls ringförmig oder u-förmig ausgebildet ist, bildet einen unteren Teil der Grundstruktur 61. Der obere Teil der Grundstruktur 61 ist über die Führungsstangen 69 mit dem unteren Teil der Grundstruktur 61 verbunden. Bevorzugt sind der obere Teil und der untere Teil der Grundstruktur 61 über vier Führungsstangen 69 miteinander verbunden. Zwischen der ersten Platte 68 und der zweiten Patte 68a ist die Werkzeugaufnahme 66 an den Führungsstangen 69 gelagert.

Das Kupplungselement 62 ist bevorzugt am oberen Teil der Grundstruktur 61 angeordnet. Das Kupplungselement 62 ist derart gestaltet, um mit dem Kupplungselement 71 der Aufnahmeeinheit 70 zu koppeln. Das Kupplungselement 62 umfasst Einführöffnungen 62a, wobei diese Einführöffnungen 62a bevorzugt dazu dienen, Einführelemente 71a des Kupplungselements 71 aufzunehmen. Die Einführöffnungen 62a sind bevorzugt runde Öffnungen. Das Kupplungselement 62 umfasst ferner Schnittstellen zur Übertragung von bevorzugt elektrischer und pneumatischer Energie und zur Übertragung von Steuersignalen. In einem gekoppelten Zustand bilden die Kupplungselemente 62, 71 bevorzugt eine formschlüssige Verbindung. Das Kupplungselement 71 und das Kupplungselement 62 sind in der Interaktionsposition 200 koppelbar.

Die Sensorik 67 ist am unteren Teil der Grundstruktur 61 angeordnet, wobei die Sensorik 67 insbesondere den Abstand zwischen dem Werkzeugaggregat 60 und dem Werkstück 110 überwacht, um eine optimale Prozessierung zu gewährleisten und, um Kollisionen mit dem Werkstück 110 zu vermeiden. Die Sensorik 67 ist derart gestaltet, um mit dem Anlagensteuerungssystem 100 zu kommunizieren.

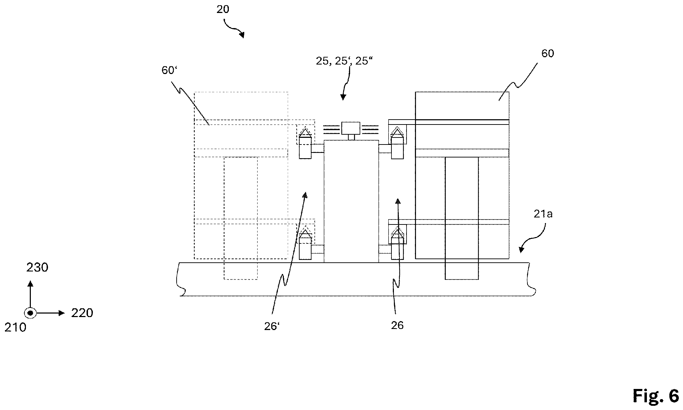

Fig. 6 zeigt eine Prinzipskizze eines Ausführungsbeispiels eines Lagerplatzes 25, 25', 25" des Lagerungssystems 20, 20' mit zwei eingelagerten Werkzeugaggregaten 60, 60'. Es ist in Fig. 6 zu erkennen, dass der Lagerplatz 25, 25', 25" bzw. dessen Grundstruktur 34 auf dem Trägerbalken 21a des Lagerungssystems 20, 20' angeordnet ist. Es ist ferner zu erkennen, dass jeweils eines der Werkzeugaggregat 60, 60' in jeweils einer Aufnahmevorrichtung 26, 26' des Lagerungssystems 20, 20' eingelagert ist. Das jeweilige Werkzeugaggregate 60, 60' ist in einer definierten und gesicherten Position in der jeweiligen Aufnahmevorrichtung 26, 26' eingelagert. Durch die Ausrichteinheit 28 der jeweiligen Aufnahmevorrichtung 26, 26' ist die definierte Position des jeweiligen Werkzeugaggregats 60, 60' einstellbar.

Fig. 7 zeigt eine Anordnung der Bewegungseinheit 70 mit angekoppeltem Werkzeugaggregat 60 zur Bearbeitung des Werkstücks 110 an einer vordefinierten Bearbeitungsposition 130. Zum Erreichen der vordefinierten Bearbeitungsposition 130 steuert das Anlagensteuerungssystem 100 die Bewegungseinheit 40 und die Aufnahmeeinheit 70 entsprechend an, damit das Werkzeug 120 des Werkzeugaggregats die vordefinierte Bearbeitungsposition 130 erreichen kann. Bei den Ausführungsbeispielen gemäß Fig. 1 und Fig. 2 wird hierzu die Bewegungseinheit 40 in der Längsrichtung 210 verfahren, die Aufnahmeeinheit 70 in der Querrichtung 220 entlang des Querträgers 45 verfahren und der absenkbare zweite Teil des Grundgerüsts 77 der Aufnahmeeinheit 70 mit dem Werkzeugaggregat in Höhenrichtung 230 nach unten verfahren. Diese Richtungen können sich ändern, je nachdem wie das Werkstück 110 gelagert ist.

Fig. 8 zeigt eine Prinzipskizze eines Ausführungsbeispiels der Antriebseinheit 30 des Lagerungssystems 20, 20'. Das Lagerungssystem 20, 20' ist mit Hilfe der Antriebseinheit 30 entlang der Bewegungsstruktur 50, 51 bewegbar. Die Antriebseinheit 30 umfasst bevorzugt einen motorischen Antrieb 31, ein Kraftübertragungsmittel 32, eine Antriebsrolle 36, vier gleichartige Bewegungselemente 33-1, 33-2, zwei gleichartige Umlenkrollen 35, 35' und zwei Befestigungspunkte 37, 37' für das Kraftübertragungsmittel 32.

Die Antriebsrolle 36 und der motorische Antrieb 31 sind in der gezeigten Ausführungsform an der Grundstruktur des Lagerungssystems 20, 20', insbesondere am Trägerbalken 21a des Lagerungssystems 20, 20' angeordnet. Die Antriebsrolle 36 ist bevorzugt um eine zur Querrichtung 220 parallelen Achse drehbar gelagert ist und mit dem motorischen Antrieb 31, insbesondere einem elektrischen Servomotor 31a, mechanisch verbunden ist. Die Antriebsrolle 36 ist bevorzugt zylindrisch ausgebildet und weiset eine verzahnte Struktur auf der zylindrischen Oberfläche auf. Der elektrische Servomotor 31a überträgt über eine Antriebswelle eine rotatorische Bewegungsenergie an die Antriebsrolle 36. Die Antriebsrolle 36 ist derart angeordnet, um das Kraftübertragungsmittel 32 anzutreiben. Der elektrische Servomotor 31a ist über die Steuerleitungen 101' mit dem Anlagensteuerungssystem 100 verbunden.

An den unteren Enden der beiden Stützen 22, 22' des Lagerungssystems 20 sind jeweils zwei Bewegungselemente 33-1, 33-2 des Lagerungssystems 20, 20' drehbeweglich gelagert. Die Bewegungselemente 33-1, 33-2 insbesondere Laufräder 33a, 33a', sind bevorzugt um eine zur Querrichtung 220 parallelen Achse drehbar in den Stützen 22, 22' gelagert, sodass die Bewegungselemente 33-1, 33-2 die Last des Lagerungssystems 20, 20' tragen können und das Lagerungssystem 20, 20' entlang der zwei parallelen Fahrschienen 50a, 50a' oder entlang der einzelnen Schiene 51a bewegbar ist. Die Laufräder 33a, 33a' haben eine rotationssymmetrische zylindrische Form. Die Laufräder 33a, 33a'weisen Laufflächen auf, insbesondere ballige Laufflächen. Die balligen Laufflächen der Laufräder 33a, 33a' sind auf den zwei parallelen Fahrschienen 50a, 50a' oder der einzelnen Schiene 51a bewegbar. Durch die balligen Laufflächen wird die Kontaktfläche zu den zwei parallelen Fahrschienen 50a, 50a' oder der einen Fahrschien 51a auf ein Minimum reduziert. Folglich wird durch die balligen Laufflächen die Reibung zwischen den zwei parallelen Fahrschienen 50a, 50a' bzw. der einen Fahrschiene 51a und den Laufrädern 33a, 33a' minimiert. Die Laufräder 33a, 33a' weisen ferner Führungselemente, insbesondere Bordscheiben auf. Die Bordscheiben dienen zur seitlichen Führung der Laufräder 33a, 33a' auf den Führungsplatten der zwei parallelen Fahrschienen 50a, 55a' bzw. der einzelnen Fahrschiene 51a. Ein Führungsspiel in der Querrichtung 220, zwischen den Laufrädern 33a, 33a' und den zwei parallelen Fahrschienen 50a, 50a' bzw. der einzelnen Fahrschiene 51a liegt bevorzugt im Bereich von 1,5 mm bis 3 mm.

Der Antrieb 30 kann nur einer der Stützen 22, 22' angeordnet sein. In einem bevorzugten Ausführungsbeispiel ist je ein Antrieb 30 an je einer Stütze 22, 22' angeordnet.

Es sind jedoch auch alternative Bewegungselemente wie z.B. Führungswagen anwendbar, wobei die Führungswagen bevorzugt über Führungsschienen bewegbar sind. Die Führungswagen und die Führungsschienen sind derart gestaltet, dass diese formschlüssig ineinandergreifen und eine nahezu spielfreie Führung gewährleisten. Bei einer derartigen längsgerichteten Führung liegt das Führungsspiel in einer Querrichtung 220 bevorzugt im Bereich 0,1 mm bis 0,5 mm.

Die Umlenkrollen 35, 35' sind bevorzugt um eine zur Querrichtung 220 parallelen Achse drehbar in der Stütze 22, 22' des Lagerungssystems 20, 20' gelagert, wobei die Umlenkrollen 35, 35' bevorzugt derart positioniert sind, um das Kraftübertragungsmittel 32 umzulenken.

Das Kraftübertragungsmittel 32, insbesondere der Zahnriemen 32a, weist eine verzahnte Struktur auf der Oberfläche auf, wobei die verzahnte Struktur des Zahnriemens 32a und die verzahnte Struktur der Antriebsrolle 36 gleichartig ausgebildet sind, um ineinander zu greifen. Der Zahnriemen 32a verläuft über die Antriebsrolle 36 zu den zwei Umlenkrollen 35, 35', wobei der Zahnriemen 32a von den Umlenkrollen 35, 35' bevorzugt jeweils um 90° umgelenkt wird, sodass dieser entlang einer Fahrschiene der zwei parallelen Fahrschienen 50a, 50a' oder der einzelnen Fahrschiene 51a verläuft. Der Zahnriemen 32a ist an beiden Enden einer Fahrschiene der zwei parallelen Fahrschienen 50a, 50a' oder der einzelnen Fahrschiene 51a über die Befestigungspunkte 37, 37' befestigt. Das Kraftübertragungsmittel 32 kann insbesondere über die Befestigungspunkte 37, 37' gespannt werden, sodass eine Zugkraft aufgebaut werden kann und somit eine Verbindung zwischen der Antriebseinheit 30 30 und der einen Fahrschiene 51a oder einer der zwei parallelen Fahrschienen 50a, 50a' aufgebaut wird. Die verzahnte Struktur des Zahnriemens 32a greift in die verzahnte Struktur der Antriebsrolle 36, um die rotatorische Bewegungsenergie des elektrischen Servomotors 31a in eine lineare Bewegungsenergie umzuwandeln und somit das Lagerungssystem 20, 20' in eine lineare Längsbewegung zu versetzen.

Das in Bezug zur Fig. 8 beschriebene Antriebssystem wird bevorzugt auch als Antriebssystem 46 für die Bewegungseinheit 40 eingesetzt, was durch die Angabe der betreffenden Bezugszeichen in Fig. 8 angedeutet ist. Wie beim Lagerungssystem 20, 20' erzeugt bei der Bewegungseinheit 40 bevorzugt ein weiterer elektrischer Servomotor die Bewegungsenergie, wobei die Bewegungsenergie an das Kraftübertagungsmittel 32 übertagen wird. An den unteren Enden der beiden Ständer 42, 42' sind bevorzugt jeweils Bewegungselemente 33", 33‴ der Bewegungseinheit 40 angeordnet, um eine Bewegung entlang der Bewegungsstruktur 50 zu ermöglichen. Die Bewegungselemente 33", 33‴ der Bewegungseinheit 40 sind derart gestaltet, um insbesondere eine geführte Bewegung der Bewegungseinheit 40 in der Längsrichtung 210 entlang der Bewegungsstruktur 50 zu ermöglichen.

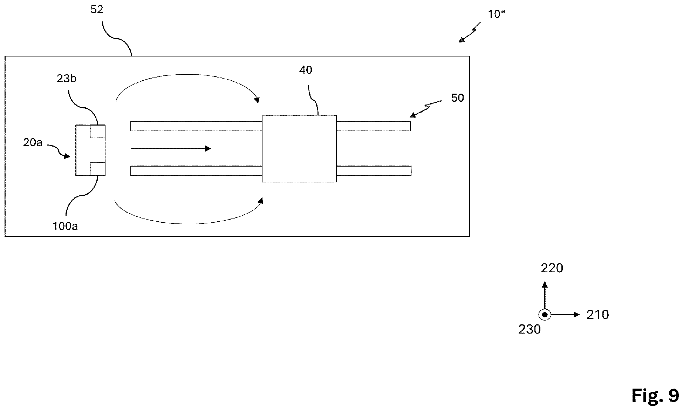

In einem dritten bevorzugten Ausführungsbeispiel, welches in Fig. 9 dargestellt ist, umfasst eine Werkstückbearbeitungsanlage 10" ein Lagerungssystem, bevorzugt in Form eines fahrerlosen Transportsystems 20a, wobei das fahrerlose Transportsystem 20a selbstständig auf einer Standfläche der Werkstückbearbeitungsanlage bewegbar ist. Im Gegensatz zu den in Bezug zu Fig. 1 und Fig. 2 beschriebenen Lagerungssystemen 20, 20' bewegt sich das fahrerlose Transportsystem 20a frei in einem Bewegungsraum 52, die als Bewegungsstruktur fungiert. Das Lagerungssystem in Form des fahrerlosen Transportsystems 20a orientiert sich anhand von Bildverarbeitungssensoren und/oder Radarsensoren und/oder Lidar Sensoren und/oder Ultraschallsensoren auf der Standfläche der Werkstückbearbeitungsanlage. Über eine eigene Steuereinrichtung 100a, insbesondere die eine künstliche Intelligenz nutzt, werden die Daten der Bildverarbeitungssensoren genutzt, um die Umgebung zu erlernen und zu interpretieren, um Hindernisse zu erkennen und um selbstständig eine sichere Fahrroute zu planen. Die künstliche Intelligenz verwendet Algorithmen, um aus den gesammelten Daten Muster zu erkennen und Wissen zu extrahieren. Dieser Prozess des "Trainings" ermöglicht es der KI, Vorhersagen zu treffen oder Aufgaben zu erledigen, basierend auf den gelernten Mustern.

Das Lagerungssystem 20a, welche eine künstliche Intelligenz nutzt, bietet den Vorteil, dass sich diese durch bevorzugt Mustererkennungsalgorithmen selbst trainiert und keine vorgegebenen Fahrprofile einprogrammiert werden müssen, wobei die künstliche Intelligenz eine flexible Reaktion des Lagerungssystems auf unvorhergesehene Hindernisse ermöglicht. Insbesondere in Fertigungslinien zur Produktion von Holzrahmenelementen sind unvorhergesehene Hindernisse unvermeidbar, da zum Beispiel abgesägtes Plattenmaterial in einem Bewegungsraum 52 des Lagerungssystems 20a vorhanden sein kann. Bevorzugt kommt in dem Lagerungssystem 20a eine künstliche Intelligenz zum Einsatz, welche ein neuronales Netzwerk zur Datenverarbeitung verwendet, um die komplexen Daten der Bildverarbeitungssensoren zu erfassen und folglich selbstständig den weiteren Verfahrweg effizient zu planen. Das neuronale Netzwerk ist der Algorithmus der künstlichen Intelligenz und kommt insbesondere dort zum Einsatz wo komplexe Aufgaben, wie z.B. Bilderkennung oder Spracherkennung, zu lösen sind. Die Funktionsweise ist dem menschlichen Gehirn nachempfunden und bestehen aus künstlichen Neuronen, die in Schichten angeordnet sind. Insbesondere besteht ein neuronales Netzwerk aus einer Eingabeschicht und einer Ausgabeschicht. Zwischen der Eingabeschicht und der Ausgabeschicht befinden sich Schichten, welche komplexe Berechnungen durchführen, um Muster und Zusammenhänge in den Daten der Bildverarbeitungssensoren zu erkennen. Die Muster, welche erkannt werden, können bevorzugte Fahrwege in einer Fertigungslinie zur Produktion von Holzrahmenelementen sein. Weiterhin möglich ist, dass die künstliche Intelligenz die Produktionsabläufe der Bewegungseinheit 40, 40', insbesondere die Bewegungsmuster, analysiert, um den optimalen möglichen Zeitpunkt für einen Austausch eines Werkzeugaggregats (60, 60', 60") zu lernen.

Die künstliche Intelligenz wird bevorzugt durch eine simulierte Produktionsumgebung und ein simuliertes Produktionsverfahren auf den Einsatz in einer Werkstückbearbeitungsanlage 10" trainiert. Hierbei werden viele unterschiedliche Szenarien simuliert und der künstlichen Intelligenz zum Training zur Verfügung gestellt. Es sind jedoch auch andere Trainingsmethoden für die künstliche Intelligenz möglich. Unter anderem könnte die künstliche Intelligenzweitere Erfahrungen über derartige Produktionsprozesse über öffentliche cloudbasierte Datenbanken erlangen.

Durch den Einsatz des Lagerungssystems 20a, kann die Effizienz des Austauschs eines Werkzeugaggregats (60, 60', 60"), durch die Lernfähigkeit der künstlichen Intelligenz, mit regelmäßigem Training deutlich verbessert werden. Ferner kann die Verfügbarkeit der Werkstückbearbeitungsanlage 10" deutlich gesteigert werden, da sich die Ausfallzeiten einer solchen Anlage reduzieren, da das Lagerungssystem 20a selbstständig auf Störungen reagieren kann und beispielsweise einen Maschinenbediener über einen Monitor an einem Bedienpult auf diese hinweisen kann. Unter Störungen sind in diesem Fall Hindernisse in Form von abgesägtem Plattenmaterial gemeint.

Ferner werden Werkzeugdaten der Werkzeugaggregate (60, 60', 60", 60"', 60"", 60‴ʺ), insbesondere Daten die einen Rückschluss über die Bearbeitungsqualität zulassen, dem Lagerungssystem 20a zur Verfügung gestellt. Außerdem werden Bewegungsdaten der Bewegungseinheit 40, 40', insbesondere Daten die einen Rückschluss über die Position innerhalb der Werkstückbearbeitungsanlage 10" zulassen, dem Lagerungssystem 20a zur Verfügung gestellt. Die Werkzeugdaten und Bewegungsdaten, welche über das Anlagensteuerungssystem 100 der Werkstückbearbeitungsanlage 10" und/oder über eine internetbasierte Datenbank zur Verfügung gestellt werden, nutzt das Lagerungssystem 20a, um einen intelligenten und vorausschauenden Austausch der Werkzeugaggregate (60, 60', 60") zu ermöglichen.

In einem vierten bevorzugten Ausführungsbeispiel, welches in Fig. 10 dargestellt ist, kann das Lagerungssystem 20'auch mit zwei Bewegungseinheiten 40, 40' interagieren.

In den nachfolgenden Abschnitten werden weitere nicht in einer Figur dargestellte Varianten einer Werkstückbearbeitungsanlage ohne Bezug zu Figuren beschrieben, die mindestens eines der zuvor beschriebenen selbstfahrenden Lagerungssysteme umfassen.

In einem nicht dargestellten Ausführungsbeispiel, wobei die Werkstückbearbeitungsanlage ein Klgesteuertes Lagerungssystem 20a mit einer Bewegungseinheit in Form eines Knickarmroboters umfasst, könnte das Lagerungssystem 20a den Knickarmroboter beauftragen die Hindernisse mit einem Handhabungsaggregat zu entfernen, um so den Verfahrweg des Lagerungssystems 20a frei zu räumen.

In einer alternativen Variante der Werkstückbearbeitungsanlage umfasst die Werkstückbearbeitungsanlage ein alternatives Lagerungssystem mit einer alternativen Grundstruktur. Die alternative Grundstruktur ist als kreisförmiges Karussell ausgebildet. Das kreisförmige Karussell ist rotierbar auf einer Stütze gelagert. Die Stütze ist auf einer Bewegungsstruktur in der Längsrichtung beweglich gelagert. Das kreisförmige Karussell umfasst eine horizontal ausgerichtete kreisförmige Scheibe, welche rotationssymmetrisch um die vertikale Richtung drehbar gelagert ist. Außerdem umfasst das kreisförmige Karussell einen Rotationsantrieb zum Drehen der kreisförmige Scheibe. Bevorzugt sind auf dem kreisförmigen Karussell die Lagerplätze für die Werkzeugaggregate rotationssymmetrisch angeordnet. Das alternative Lagerungssystem mit einem kreisförmigen Karussell ist derart gestaltet, dass das alternative Lagerungssystem das Werkstück und die Bewegungseinheit seitlich passieren kann. Somit ist es möglich, dass sich das alternative Lagerungssystem von einem Ende der Werkstückbearbeitungsanlage zum anderen Ende der Werkstückbearbeitungsanlage entlang der Längsrichtung bewegen kann.

In einem weiteren bevorzugten nicht dargestellten Ausführungsbeispiel der Werkstückbearbeitungsanlage, weist die Werkstückbearbeitungsanlage ein Lagerungssystem mit einer alternativen Antriebseinheit auf. Diese Antriebseinheit umfasst im Wesentlichen einen elektrischen Servomotor, ein Ritzel und eine Zahnstange. Am elektrischen Servomotor ist das Ritzel angeordnet, wobei das Ritzel eine Verzahnung aufweist. Der elektrische Servomotor ist am unteren Ende einer Stütze des Lagerungssystems angeordnet. Die Zahnstange verläuft in Längsrichtung der Werkstückbearbeitungsanlage parallel zur Bewegungsstruktur, auf welcher das Lagerungssystem beweglich gelagert ist. Bevorzugt ist die Zahnstange an der Bewegungsstruktur befestigt. Die Zahnstange weist eine Verzahnung auf, wobei die Verzahnung der Zahnstange und die Verzahnung des Ritzels gleichartig ausgebildet sind. Der elektrische Servomotor ist derart an der Stütze des Lagerungssystems angeordnet, dass die Verzahnung des Ritzels in die Verzahnung der Zahnstange eingreift, um die rotatorische Bewegungsenergie des elektrischen Servomotors in eine lineare Bewegungsenergie umzuwandeln und somit das Lagerungssystem in eine lineare Längsbewegung zu versetzten.

In einem weiteren nicht dargestellten Ausführungsbeispiel der Werkstückbearbeitungsanlage ist die Bewegungseinheit als Knickarmroboter ausgestaltet. Der Knickarmroboter bewegt sich bevorzugt auf einer Bewegungsstruktur in der Längsrichtung der Werkstückbearbeitungsanlage entlang eines Werkstücks, wobei die Bewegungsstruktur bevorzugt eine Lineareinheit für Knickarmroboter ist. Der Knickarmroboter umfasst eine Basis, welche entlang der Längsrichtung auf der Lineareinheit beweglich gelagert ist, und einen Roboterarm mit mehreren beweglichen Gelenken. Am äußersten Ende des Roboterarms des Knickarmroboters ist ein erstes Kupplungselement angebracht, welches über eine mechanische Schnittstelle mit dem Roboterarm verbunden ist, um ein Werkzeugaggregat aus dem Lagerungssystem aufzunehmen oder abzulegen. Der Knickarmroboter hat durch seinen Roboterarm mit mehreren beweglichen Gelenken mehr Bewegungsfreiheit als das oben beschriebene Bearbeitungsportal 40a. Das Bearbeitungsportal 40a hat bevorzugt drei bewegliche Freiheitsgrade, wobei die Freiheitsgrade bevorzugt einer linearen Bewegung entlang der Längsrichtung 210, der Querrichtung 220 und der vertikalen Richtung 230 entsprechen. Der Knickarmroboter hat in einer bevorzugten Ausführungsform sechs bewegliche Freiheitsgrade. Neben der linearen Bewegung entlang der Längsrichtung 210, der Querrichtung 220 und der vertikalen Richtung 230, hat der Knickarmroboter die Möglichkeit eine Drehbewegung um die Längsrichtung 210, um die Querrichtung 220 und um die vertikale Richtung 230 zu vollführen.

Durch die sechs beweglichen Freiheitsgrade des Knickarmroboters ist ein winkliges Prozessieren am Werkstück möglich, wobei das Werkzeugaggregat in einem gewissen Winkel in Relation zum Werkstück ausgerichtet ist. Im Gegensatz zum Bearbeitungsportal 40a kann der Knickarmroboter durch die sechs beweglichen Freiheitsgrade seinen Roboterarm auf beide Seiten der Lineareinheit bewegen. Hierdurch ist hat der Knickarmroboter einen größeren Bewegungsradius als das Bearbeitungsportal 40a. Folglich ist es möglich, dass zwei Werkstücke prozessierbar sind, welche in der Querrichtung 220 auf beiden Seiten der Lineareinheit gelagert sind. Folglich ist ferner möglich, dass der Knickarmroboter aus bevorzugt zwei Lagerungssystemen Werkzeugaggregate aufnehmen oder ablegen kann, wobei die beiden Lagerungssysteme in der Querrichtung 220 auf beiden Seiten der Lineareinheit positioniert sind.

Wie bereits in einem vorherigen Abschnitt erwähnt, ist weiterhin möglich, dass der Knickarmroboter Handhabungsaufgaben erledigen kann. Insbesondere versteht man unter einer Handhabungsaufgabe, dass plattenförmige Bauteile, insbesondere Platten aus Holz oder Gips, von einem Plattenstapel aufgenommen werden können. Außerdem versteht man bevorzugt unter einer Handhabungsaufgabe, dass plattenförmige Bauteile auf einem Riegelwerk oder einer Werkstückauflage der Werkstückbearbeitungsanlage abgelegt werden können. Hierfür umfasst die Werkstückbearbeitungsanlage neben dem Werkzeugaggregat auch mindestens ein Handhabungsaggregat. Das Handhabungsaggregat ist derart gestaltet ist, um ein plattenförmiges Bauteil aufnehmen zu können und, um ein plattenförmiges Bauteil abzulegen. Der Knickarmroboter kann ein Handhabungsaggregat aus dem Lagerungssystem aufnehmen und ablegen, um hiermit die Handhabungsaufgaben zu erledigen.

In einer besonderen Ausführungsform umfasst die Werkstückbearbeitungsanlage 10, 10', 10", 10‴ ferner mindestens eine Bewegungsstruktur 50, 51, die sich bevorzugt entlang der Längsrichtung 210 der Werkstückbearbeitungsanlage 10, 10', 10", 10"' erstreckt und auf der die Bewegungseinheit 40 und/oder das Lagerungssystem 20, 20' beweglich gelagert ist bzw. sind.

In einer weiteren besonderen Ausführungsform umfasst das Lagerungssystem 20, 20', 20a eine Antriebseinheit 30, mit der das Lagerungssystem 20, 20', 20a in Relation zur Bewegungseinheit 40 bewegbar ist, um sich der Bewegungseinheit 40 zu nähern oder um sich von der Bewegungseinheit 40 zu entfernen.

In einer weiteren besonderen Ausführungsform umfasst die Antriebseinheit 30 des Lagerungssystems 20, 20', 20a wenigstens einen motorischen Antrieb 31, insbesondere einen elektrischen Servomotor 31a, und mindestens ein Kraftübertragungsmittel 32, insbesondere einen Zahnriemen 32a.

In einer weiteren besonderen Ausführungsform umfasst die Antriebseinheit 30 ferner mindestens zwei Bewegungselemente 33, insbesondere Laufräder, die insbesondere auf der mindestens einen Bewegungsstruktur 50, 51 geführt bewegbar sind, um die Bewegung des Lagerungssystems 20, 20', 20a entlang der mindestens einen Bewegungsstruktur 50, 51 zu ermöglichen.

In einer weiteren besonderen Ausführungsform sind die Aufnahmeeinheit 70 und das Lagerungssystem 20, 20' derart gestaltet und konfiguriert, dass das Werkzeugaggregat 60 oberhalb, insbesondere vertikal oberhalb, oder seitlich, insbesondere in einer Querrichtung 220 der Werkstückbearbeitungsanlage 10, 10', 10", 10‴ seitlich, des Werkstücks 110 mit der Aufnahmeeinheit 70 koppelbar oder entkoppelbar ist.

In einer weiteren besonderen Ausführungsform weist die Aufnahmeeinheit 70 ein Kupplungselement 71 auf und das Werkzeugaggregat 60 weist ein Kupplungselement 62 auf, so dass die Aufnahmeeinheit 70 und das Werkzeugaggregat 60 insbesondere in einer Koppelstellung 250 koppelbar oder entkoppelbar sind.

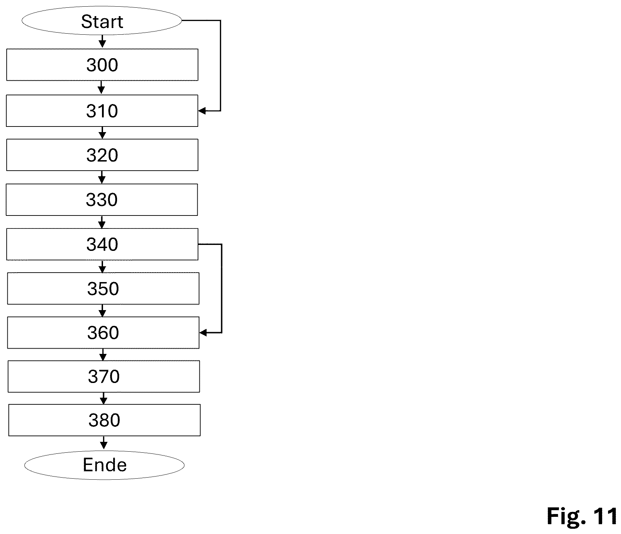

Im Folgenden wird ein beispielhaftes Verfahren anhand der Fig. 11 beschrieben, das bevorzugt von der Werkstückbearbeitungsanlage 10, 10', 10", 10‴ nach der Fig. 1 oder Fig. 2 oder Fig. 9 oder Fig. 10 oder einer der weiteren ohne Bezug zu einer Figur beschriebenen Werkstückbearbeitungsanlagen ausgeführt wird und wobei das Werkzeugaggregat 60, 60', 60" in der Interaktionsposition 200 aus dem Lagerungssystem 20, 20', 20a durch die Bewegungseinheit 40, 40' aufgenommen wird. Anschließend wird das Werkstück 110 mit dem Werkzeugaggregat 60, 60', 60" prozessiert. Abschließend wird das Werkzeugaggregat 60, 60', 60" in der Interaktionsposition 200 oder einer weiteren Interaktionsposition durch die Bewegungseinheit 40, 40' wieder in dem Lagerungssystem 20, 20', 20a abgelegt. Die Fig. 11 zeigt eine schematische Darstellung von Verfahrensschritten für ein derartiges beispielhaftes Verfahren.

In einem ersten Verfahrensschritt 300 bewegt sich die Bewegungseinheit 40 entlang einer Längsrichtung 210 bevorzugt in eine durch das Anlagensteuerungssystem 100 vorgegebene erste Interaktionsposition 200.

In einem zweiten Verfahrensschritt 310 bewegt sich das Lagerungssystem 20, 20', 20a zur Bewegungseinheit 40 und ebenfalls in die bevorzugt durch das Anlagensteuerungssystem 100 vorgegebene erste Interaktionsposition 200. Der zweite Verfahrensschritt 310 kann auch vor dem Verfahrensschritt 300 oder insbesondere simultan, also gleichzeitig, zum ersten Verfahrensschritt 300 ablaufen. In der ersten Interaktionsposition 200 befindet sich das Lagerungssystem 20, 20', 20a in einem vordefinierten Abstand benachbart zur Bewegungseinheit 40, so dass eine Interaktion zwischen der Bewegungseinheit 40 und dem Lagerungssystem 20, 20', 20a stattfinden kann.

In einem dritten Verfahrensschritt 320 bewegt sich die Aufnahmeeinheit 70, welche an der Bewegungseinheit 40 angebracht ist, in eine bevorzugt vom Anlagensteuerungssystem 100 vorgegebene Koppelstellung 250. In der Koppelstellung 250 ist ein erstes Kupplungselement 71, welches an der Aufnahmeeinheit 70 angeordnet ist, und ein zweites Kupplungselement 62, welches am Werkzeugaggregat 60 angeordnet ist, koppelbar oder entkoppelbar. Der Schritt 320 erfolgt bevorzugt zeitgleich zu den Schritten 300 und 310.

In einem vierten Verfahrensschritt 330 wird das Werkzeugaggregat 60 aus dem Lagerungssystem 20, 20', 20a entnommen und an der Aufnahmeeinheit 70 angeordnet bzw. lösbar befestigt. Insbesondere durch die Kopplung des ersten Kupplungselements 71 mit dem zweiten Kupplungselement 62 wird das Werkzeugaggregat 60 von dem Lagerungssystem 20, 20', 20a an die Aufnahmeeinheit 70 transferiert.

In einem fünften Verfahrensschritt 340 wird das Werkstück 110 prozessiert bzw. mit dem Werkzeugaggregat 60 bearbeitet. Hierfür bewegt sich die Bewegungseinheit 40 und die Aufnahmeeinheit 70 mit dem Werkzeugaggregat 60 in eine vom Anlagensteuerungssystem 100 vorgegebene Position über dem Werkstück 110, insbesondere zu einer vorgegebenen Position auf der Oberseite des Werkstücks 110. Das Werkzeug 120 des Werkzeugaggregats 60 prozessiert das Werkstück 110 nach einem vom Anlagensteuerungssystem 100 vorgegebenen Ablauf.

In einem sechsten optionalen Verfahrensschritt 350 bewegt sich die Bewegungseinheit 40 entlang der Längsrichtung 210 der Werkstückbearbeitungsanlage 10, 10' in eine durch das Anlagensteuerungssystem 100 vorgegebene zweite Interaktionsposition. Alternativ kann auch die letzte Bearbeitungsposition des Werkzeugs 120 als die zweite Interaktionsposition bestimmt werden, so dass keine Bewegung der Bewegungseinheit 40 erforderlich ist.

In einem siebten Verfahrensschritt 360 bewegt sich das Lagerungssystem 20, 20', 20a zur Bewegungseinheit 40 in die durch das Anlagensteuerungssystem 100 vorgegebene zweite Interaktionsposition. Der siebte Verfahrensschritt 360 kann nacheinander oder insbesondere simultan, also gleichzeitig, zum sechsten Verfahrensschritt 350 ablaufen. In der zweiten Interaktionsposition befindet sich das Lagerungssystem 20, 20', 20a benachbart zur Bewegungseinheit 40, jedoch ist die zweite Interaktionsposition bevorzugt bzw. in der Regel eine andere Position als die erste Interaktionsposition 200 in der Längsrichtung 210.

In einem achten Verfahrensschritt 370 bewegt sich die Aufnahmeeinheit 70 in die vom Anlagensteuerungssystem 100 vorgegebene Koppelstellung 250.

In einem neunten Verfahrensschritt 380 wird das Werkzeugaggregat 60 von der Aufnahmeeinheit 70 an das Lagerungssystem 20, 20', 20a transferiert. Durch Entkopplung des ersten Kupplungselements 71, insbesondere durch Lösen eines Koppelmechanismus 71c, in der Koppelstellung 250, löst sich das zweite Kupplungselement 62 vom ersten Kupplungselement 71. Das Werkzeugaggregat 60 befindet sich nach dem Transfer in dem Lagerplatz 25 des Lagerungssystems 20, 20', 20a. Alternativ oder zusätzlich kann ein weiteres Werkzeugaggregat 60', 60" von dem Lagerungssystem 20, 20', 20a zu der Aufnahmeeinheit 70 transferiert werden.

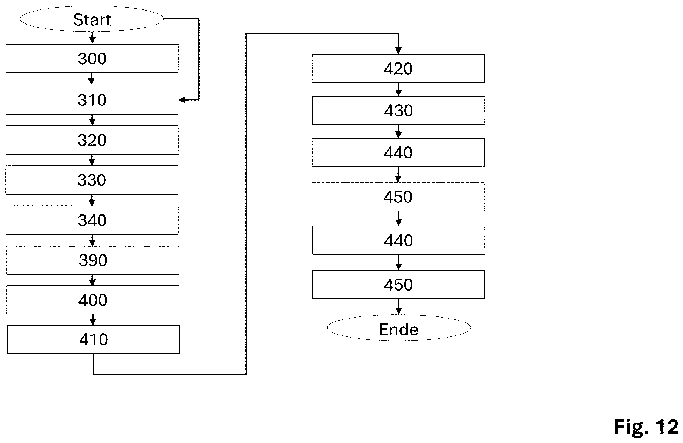

Die Fig. 12 zeigt eine schematische Darstellung ein weiteres Ausführungsbeispiel eines Verfahrens zum Prozessieren eines Werkstücks 110 insbesondere mit einer der zuvor beschriebenen Werkstückbearbeitungsanlagen 10, 10', 10", 10"'. Die Schritte 300 bis 340 sind identisch zu dem zuvor beschriebenen Ausführungsbeispiel. In einem weiteren Verfahrensschritt 390 bewegt sich eine zweite Bewegungseinheit 40' der Werkstückbearbeitungsanlage 10‴ entlang einer Längsrichtung 210 der Werkstückbearbeitungsanlage 10‴ in eine durch das Anlagensteuerungssystem 100 vorgegebene dritte Interaktionsposition.

In einem weiteren Verfahrensschritt 400 bewegt sich das Lagerungssystem 20, 20', 20a zur zweiten Bewegungseinheit 40' in die durch das Anlagensteuerungssystem 100 vorgegebene dritte Interaktionsposition.

In einem weiteren Verfahrensschritt 410 bewegt sich eine Aufnahmeeinheit der zweiten Bewegungseinheit 40' in eine vom Anlagensteuerungssystem 100 vorgegebene zweite Koppelstellung.

In einem weiteren optionalen Verfahrensschritt 420 wird ein weiteres Werkzeugaggregat 60' aus dem Lagerungssystem 20, 20', 20a an die Aufnahmeeinheit der zweiten Bewegungseinheit 40' transferiert und/oder ein noch weiteres Werkzeugaggregat 60" von der Aufnahmeeinheit der zweiten Bewegungseinheit 40' zur Lagerungsstation 20, 20', 20a transferiert.

In einem weiteren Verfahrensschritt 430 wird das Werkstück 110 oder ein weiteres Werkstück prozessiert bzw. mit dem weiteren Werkzeugaggregat 60' bearbeitet.

In einem weiteren optionalen Verfahrensschritt 440 bewegt sich die zweite Bewegungseinheit 40' entlang der Längsrichtung 210 der Werkstückbearbeitungsanlage 10" in eine durch das Anlagensteuerungssystem 100 vorgegebene vierte Interaktionsposition.

In einem weiteren optionalen Verfahrensschritt 450 bewegt sich das Lagerungssystem 20, 20', 20a zur zweiten Bewegungseinheit 40' in die durch das Anlagensteuerungssystem 100 vorgegebene vierte Interaktionsposition.

In einem weiteren optionalen Verfahrensschritt 460 bewegt sich die Aufnahmeeinheit der zweiten Bewegungseinheit 40' in eine vom Anlagensteuerungssystem 100 vorgegebene dritte Koppelstellung.

In einem weiteren optionalen Verfahrensschritt 470 wird das weitere Werkzeugaggregat 60' von der Aufnahmeeinheit der zweiten Bewegungseinheit 40' an das Lagerungssystem transferiert.

In einem weiteren optionalen Verfahrensschritt sind durch das Bewegen des Lagerungssystems 20, 20' die Bewegungseinheit 40 und das Lagerungssystem 20, 20' in eine erste frei definierbare Interaktionsposition 200 bringbar, in der die Bewegungseinheit 40 und das Lagerungssystem 20, 20' interagieren können.

In weiteren optionalen Verfahrensschritten umfasst das Verfahren ferner die Schritte:
- Bewegen 320 der Aufnahmeeinheit 70 in eine Koppelstellung 250 mit dem Lagerungssystem 20, 20', und
- Transferieren 330 des Werkzeugaggregats 60 von dem Lagerungssystem 20, 20' zur Aufnahmeeinheit 70.

In weiteren optionalen Verfahrensschritten umfasst das Verfahren ferner die Schritte:
- Prozessieren 340 des Werkstücks 110 mit dem Werkzeugaggregat 60,
- Insbesondere Bewegen 350 der Bewegungseinheit 40 und des Lagerungssystems 20, 20' in eine zweite Interaktionsposition, in der die Bewegungseinheit 40 und das Lagerungssystem 20, 20' interagieren können,
- Bewegen 360 des Lagerungssystems 20, 20' zur Bewegungseinheit 40, in die zweite Interaktionsposition, und
- Bewegen 370 der Aufnahmeeinheit 70 in die Koppelstellung 250 mit dem Lagerungssystem 20, 20',
- Transferieren 380 des Werkzeugaggregats 60 von der Bewegungseinheit 40 zum Lagerungssystem 20, 20' oder eines weiteren Werkzeugaggregats 60', 60" von dem Lagerungssystem 20, 20' zur Bewegungseinheit 40 oder von der Bewegungseinheit 40 zum Lagerungssystem 20, 20'.

### BEZUGSZEICHENLISTE

- 10, 10', 10", 10‴: Werkstückbearbeitungsanlage
- 20, 20': Lagerungssystem
- 20a: Lagerungssystem als fahrerloses Transportsystem
- 21: Grundstruktur des Lagerungssystems
- 21a: Lagerungsstruktur in Form eines Trägerbalkens
- 22, 22': Stütze
- 23: Sensorelement
- 23a: zweites Sensorelement
- 23b: Sensorik des fahrerlosen Transportsystems
- 24: Messfläche
- 24a: zweite Messfläche
- 25, 25', 25": Lagerplatz
- 26, 25': Aufnahmevorrichtung
- 27, 27': Aufnahmepunkt
- 28: Ausrichteinheit
- 29, 29': Sensor des Lagerplatzes
- 30: Antriebseinheit
- 31: motorischer Antrieb
- 31a: elektrischer Servomotor
- 32: Kraftübertragungsmittel
- 32a: Zahnriemen
- 33, 33-1, 33-2, 33', 33", 33‴: Bewegungselement
- 33a, 33a': Laufrad
- 34: Grundstruktur des Lagerplatzes
- 35, 35': Umlenkrolle
- 36: Antriebsrolle
- 37, 37': Befestigungspunkt
- 40, 40': Bewegungseinheit
- 40a: Bearbeitungsportal
- 41: Werkzeugwechselstation
- 42, 42': Ständer
- 45: Querträger
- 46: Antriebseinheit der Bewegungseinheit
- 49a: portalförmige Grundstruktur
- 50: Bewegungsstruktur
- 50a, 50a': zwei parallele Fahrschienen
- 51: zweite Bewegungsstruktur
- 51a: Fahrschiene
- 52: Bewegungsraum
- 60, 60', 60", 60‴, 60"", 60‴ʺ: Werkzeugaggregat
- 61: Grundstruktur des Werkzeugaggregats
- 62: Kupplungselement
- 62a: Einführöffnungen
- 62b: Kupplungskontaktfläche
- 63: Stützvorrichtung
- 64, 64': Stützpunkt
- 64a, 64a': Hülsenelement
- 66: Werkzeugaufnahme
- 66b: Lagerstellen
- 66c: Klemmmechanismus
- 67: Sensorik des Werkzeugaggregats
- 68: erste Platte
- 68a: zweite Platte
- 69: Führungsstangen
- 70: Aufnahmeeinheit
- 71: Kupplungselement
- 71a: Einführelemente
- 71b: Kupplungskontaktfläche
- 71c: Koppelmechanismus
- 73: Grundgerüst
- 74: Einstelleinheit
- 75: Schnittstelle
- 75a: Führungswagen
- 76: erster Teil des Grundgerüsts
- 77: zweiter Teil des Grundgerüsts
- 78: lineare Führung
- 83: horizontaler Antrieb
- 83a: elektrischer Servomotor
- 86: vertikaler Antrieb
- 86a: pneumatischer Linearantrieb
- 90: Werkstückauflage
- 100: Anlagensteuerungssystem
- 100a: Steuerungseinrichtung
- 101, 101': Steuerleitung
- 102: CPU
- 103: Speichereinheit
- 110: Werkstück
- 110a: plattenförmige Bauteile
- 110b: Riegelwerk
- 120: Werkzeug
- 130: Bearbeitungsposition
- 200: Interaktionsposition
- 210: Längsrichtung
- 220: Querrichtung
- 230: vertikale Richtung
- 250: Koppelstellung
- 300: Bewegen einer Bewegungseinheit
- 310: Bewegen eines Lagerungssystem
- 320: Bewegen einer Aufnahmeeinheit der Bewegungseinheit
- 330: Transferieren eines Werkzeugaggregats
- 340: Prozessieren eines Werkstücks
- 350: Bewegen der Bewegungseinheit
- 360: Bewegen des Lagerungssystem
- 370: Bewegen der Aufnahmeeinheit
- 380: Transferieren des Werkzeugaggregats
- 390: Bewegen einer zweiten Bewegungseinheit
- 400: Bewegen des Lagerungssystems
- 410: Bewegen einer Aufnahmeeinheit der zweiten Bewegungseinheit
- 420: Transferieren eines weiteren Werkzeugaggregats
- 430: Prozessieren des Werkstücks oder eines weiteren Werkstücks
- 440: Bewegen der zweiten Bewegungseinheit
- 450: Bewegen des Lagerungssystems
- 460: Bewegen der Aufnahmeeinheit der zweiten Bewegungseinheit
- 470: Transferieren des weiteren Werkzeugaggregats

## Patentansprüche

1. Werkstückbearbeitungsanlage (10, 10', 10", 10‴) zum Prozessieren eines Werkstücks (110), aufweisend:
- eine Bewegungseinheit (40), die entlang einer Längsrichtung (210) der Werkstückbearbeitungsanlage (10, 10', 10", 10‴) bewegbar ist und an der eine Aufnahmeeinheit (70) für ein Werkzeugaggregat (60) zum Prozessieren des Werkstücks (110) angeordnet ist; und
- ein Lagerungssystem (20, 20', 20a) mit wenigstens einem Lagerplatz (25, 25', 25") für das Werkzeugaggregat (60, 60', 60");
**dadurch gekennzeichnet, dass** das Lagerungssystem (20, 20', 20a) eingerichtet ist, sich abhängig oder unabhängig von der Bewegungseinheit (40) insbesondere zum jeweiligen Aufenthaltsort der Bewegungseinheit (40) insbesondere in einer horizontalen Ebene zu bewegen.

2. Werkstückbearbeitungsanlage (10, 10', 10", 10‴) nach Anspruch 1 **dadurch gekennzeichnet, dass** die Werkstückbearbeitungsanlage (10, 10', 10", 10‴) ferner mindestens ein Sensorelement (23, 23a) umfasst, welches konfiguriert ist, eine räumliche Anordnung von der Bewegungseinheit (40) und dem Lagerungssystem (20, 20') wahrzunehmen, wobei das mindestens eine Sensorelement (23, 23a) insbesondere konfiguriert ist, den Abstand und/oder die relative Position zwischen der Bewegungseinheit (40) und dem Lagerungssystem (20, 20') zu messen und wobei das mindestens eine Sensorelement (23, 23a) insbesondere als Abstandssensor ausgebildet ist, auf Basis von elektromagnetischen oder akustischen Wellen zu messen.

3. Werkstückbearbeitungsanlage (10, 10', 10", 10‴) nach Anspruch 1 oder 2, **dadurch gekennzeichnet, dass** die Werkstückbearbeitungsanlage (10, 10', 10", 10‴) ferner ein Anlagensteuerungssystem (100) umfasst, wobei das Anlagensteuerungssystem (100) zur koordinierten Steuerung der Bewegungseinheit (40) und des Lagerungssystems (20, 20') vorgesehen ist, so dass die Bewegungseinheit (40) und das Lagerungssystem (20, 20') in zumindest eine Interaktionsposition (200) bewegbar sind, in welcher sich die Bewegungseinheit (40) benachbart zum Lagerungssystem (20, 20') befindet, um zwischen der Bewegungseinheit (40) und dem Lagerungssystem (20, 20') eine Interaktion zu ermöglichen, wobei bevorzugt die Werkstückbearbeitungsanlage (10, 10', 10", 10"') ferner eine Kommunikationsverbindung (101, 101') zwischen dem mindestens einen Sensorelement (23, 23a) und dem Anlagensteuerungssystem (100) umfasst, über die Informationen des mindestens einen Sensorelements (23, 23a) kommuniziert werden können.

4. Werkstückbearbeitungsanlage (10, 10', 10", 10‴) nach Anspruch 2 oder 3, **dadurch gekennzeichnet, dass** an der Bewegungseinheit (40) und/oder dem Lagerungssystem (20, 20') mindestens eine Messfläche (24, 24b) für das mindestens eine Sensorelement (23, 23a) ausgebildet ist, um eine Abstandsmessung zwischen dem Lagerungssystem (20, 20') und der Bewegungseinheit (40) zu ermöglichen.

5. Werkstückbearbeitungsanlage (10, 10', 10", 10‴) nach einem der vorangehenden Ansprüche, **dadurch gekennzeichnet, dass** das Lagerungssystem (20, 20') derart ausgebildet ist, dass das Lagerungssystem (20, 20') über das Werkstück (110) bewegt werden kann oder dass das Lagerungssystem (20, 20') seitlich das Werkstück (110) passieren kann, um insbesondere eine Bewegung des Lagerungssystems (20, 20') von einem Ende der Werkstückbearbeitungsanlage (10, 10', 10", 10‴) zum anderen Ende der Werkstückbearbeitungsanlage (10, 10', 10", 10‴) entlang der Längsrichtung (210) der Werkstückbearbeitungsanlage (10, 10', 10", 10‴) zu ermöglichen.

6. Werkstückbearbeitungsanlage (10, 10', 10", 10‴) nach einem der vorangehenden Ansprüche, **dadurch gekennzeichnet, dass** das Lagerungssystem (20, 20') eine Lagerungsstruktur (21), bevorzugt in Form eines Trägerbalkens (21a) oder eines rotierbaren kreisförmigen Karussells und wenigstens eine Stütze (22, 22'), bevorzugt eine erste und eine zweite Stütze (22, 22'), als eine Grundstruktur (21) aufweist, wobei an der Lagerungsstruktur (21) der wenigstens eine Lagerplatz (25, 25', 25") angeordnet ist, wobei an der wenigstens einen Stütze (22, 22') die Lagerungsstruktur (21) aufliegt, und wobei bevorzugt die Bewegungselemente (33, 33') der Antriebseinheit (30) an der Stütze (22, 22'), bevorzugt am unteren Ende der Stütze (22, 22'), angeordnet sind, wobei bevorzugt zumindest zwei Bewegungselemente (33-1, 33-2) an der ersten Stütze (22) und zumindest zwei weitere Bewegungselemente (33') an der zweiten Stütze (22') angeordnet sind und folgende Konfigurationen ermöglicht:
- die mindestens eine Bewegungsstruktur (51) wird durch eine Fahrschiene (51a) gebildet, wobei die Bewegungselemente (33, 33'), die an der ersten Stütze (22) angeordnet sind, eingerichtet sind, sich auf der Fahrschiene (51a) zu bewegen, wobei die Bewegungselemente (33, 33'), die an der zweiten Stütze (22') angeordnet sind, eingerichtet sind, sich auf der Fahrschiene (51a) zu bewegen,
- die mindestens eine Bewegungsstruktur (50) wird durch eine erste Fahrschiene (50a) und eine zweite Fahrschiene (50a') gebildet, die insbesondere parallel zueinander angeordnet sind, wobei die zwei Bewegungselemente (33, 33') der ersten Stütze (22) eingerichtet sind, sich auf der ersten Fahrschiene (50a) zu bewegen und die zwei Bewegungselemente (33, 33') der zweiten Stütze (22') eingerichtet sind, sich auf der zweiten Fahrschiene (50a') zu bewegen.

7. Werkstückbearbeitungsanlage (10, 10', 10", 10‴) nach einem der vorangehenden Ansprüche, **dadurch gekennzeichnet, dass** der Lagerplatz (25, 25', 25") eine Aufnahmevorrichtung (26), bevorzugt zwei Aufnahmevorrichtungen (26, 26'), umfasst, und dass das Werkzeugaggregat (60) eine Stützvorrichtung (63) umfasst, wobei die Aufnahmevorrichtung (26) bzw. die zwei Aufnahmevorrichtungen (26, 26') und die Stützvorrichtung (63) ein Lagern des Werkzeugaggregats (60) im Lagerplatz (25, 25', 25") ermöglichen.

8. Werkstückbearbeitungsanlage (10, 10', 10", 10‴) nach Anspruch 7, **dadurch gekennzeichnet, dass** die Aufnahmevorrichtung (26) mindestens zwei Aufnahmepunkte (27, 27'), insbesondere drei Aufnahmepunkte (27, 27'), umfasst, und die Stützvorrichtung (63) mindestens zwei Stützpunkte (64, 64'), insbesondere drei Stützpunkte (64, 64') umfasst, wobei die Aufnahmepunkte (27, 27') und die Stützpunkte (64, 64') derart gestaltet und angeordnet sind, um eine formschlüssige und lösbare Verbindung zwischen dem Werkzeugaggregat (60) und dem Lagerplatz (25, 25', 25") zu ermöglichen.

9. Werkstückbearbeitungsanlage (10, 10', 10", 10‴) nach Anspruch 7 oder 8, **dadurch gekennzeichnet, dass** die Aufnahmevorrichtung (26) eine Ausrichteinheit (28) und dass die Aufnahmeeinheit (70) eine Einstelleinheit (74) umfasst, wobei mit der Ausrichteinheit (28) und der Einstelleinheit (74) Kupplungskontaktflächen (62b, 71b) des Kupplungselements (71) und des Kupplungselements (62) derart einstellbar sind, um die Kopplung oder Entkopplung des Kupplungselements (71) und des Kupplungselements (62) in der Koppelstellung (250) zu ermöglichen.

10. Werkstückbearbeitungsanlage (10") nach einem der vorhergehenden Ansprüche, **dadurch gekennzeichnet, dass** das Lagerungssystem bevorzugt als fahrerloses Transportsystem (20a) ausgestaltet ist und Sensorik (23b), bevorzugt Bildverarbeitungssensoren, weiter bevorzugt Kameras, umfasst, um sich in einem Bewegungsraum (52) zu orientieren.

11. Werkstückbearbeitungsanlage (10") nach Anspruch 10, **dadurch gekennzeichnet, dass** das Lagerungssystem eine Steuerungseinrichtung (100a) umfasst, welche eine künstliche Intelligenz nutzt, um anhand von Daten der Bildverarbeitungssensoren den Bewegungsraum (52) zu erlernen und zu interpretieren.

12. Werkstückbearbeitungsanlage (10‴) nach einem der vorhergehenden Ansprüche, **dadurch gekennzeichnet, dass** die Werkstückbearbeitungsanlage ferner mindestens eine zweite Bewegungseinheit (40') umfasst, wobei insbesondere die Bewegungseinheit (40) und die mindestens eine zweite Bewegungseinheit (40') gleichartig ausgebildet sind, und wobei das Lagerungssystem (20') derart ausgebildet ist, um sich der Bewegungseinheit (40) oder der mindestens einen zweiten Bewegungseinheit (40') zu nähern oder sich zu entfernen und mit der Bewegungseinheit (40) oder der mindestens einen zweiten Bewegungseinheit (40') zu interagieren.

13. Werkstückbearbeitungsanlage (10, 10', 10", 10‴) nach einem der vorhergehenden Ansprüche, **dadurch gekennzeichnet, dass** die Bewegungseinheit (40, 40') ein Bearbeitungsportal (40a) oder ein Knickarmroboter ist.

14. Verfahren zum Prozessieren eines Werkstücks (110), insbesondere mit einer Werkstückbearbeitungsanalage (10, 10', 10", 10"') nach einem der Ansprüche 1 bis 13, umfassend den Schritt:
- Bewegen (300) einer Bewegungseinheit (40), an der eine Aufnahmeeinheit (70) für ein Werkzeugaggregat (60) zum Prozessieren eines Werkstücks (110) angeordnet ist, entlang einer Längsrichtung (210) der Werkstückbearbeitungsanlage (10);
**dadurch gekennzeichnet, dass** das Verfahren ferner den folgenden Schritt umfasst:
- Bewegen (310) eines Lagerungssystem (20, 20') mit wenigstens einem Lagerplatz (25, 25', 25") für das Werkzeugaggregat (60) unabhängig oder abhängig von dem Bewegen (300) der Bewegungseinheit (40) insbesondere zum jeweiligen Aufenthaltsort der Bewegungseinheit (40) bevorzugt in einer horizontalen Ebene.

15. Verfahren nach Anspruch 14, **dadurch gekennzeichnet, dass** das Bewegen der Bewegungseinheit (40) mittels einer Bewegungsstruktur (50), insbesondere mittels mindestens einer Schiene, erfolgt und das Bewegen des Lagerungssystems (20, 20') mittels der Bewegungsstruktur (50) oder einer weiteren Bewegungsstruktur (51), insbesondere mittels mindestens einer weiteren Schiene, erfolgt.

16. Verfahren nach einem der Ansprüche 14 oder 15, **dadurch gekennzeichnet, dass** das Verfahren ferner die folgenden Schritte umfasst:
- Bewegen (390) einer weiteren Bewegungseinheit an der eine Aufnahmeeinheit für ein Werkzeugaggregat zum Prozessieren des Werkstücks oder eines weiteren Werkstücks angeordnet ist in eine dritte Interaktionsposition;
- Bewegen (400) des Lagerungssystems zu der weiteren Bewegungseinheit in die dritte Interaktionsposition, in der die weitere Bewegungseinheit und das Lagerungssystem interagieren können,
- Transferieren (420) des Werkzeugaggregats (60) oder eines noch weiteren Werkzeugaggregats zwischen dem Lagerungssystem (20, 20') und der weiteren Bewegungseinheit (40), und
- Prozessieren (410) des Werkstücks (110) oder eines weiteren Werkstücks mit dem noch weiteren Werkzeugaggregat.
